(19) Europäisches Patentamt
European Patent Office
Office européen des brevets

(11) **EP 3 898 747 B1**

(12) **EUROPÄISCHE PATENTSCHRIFT**


(45) Veröffentlichungstag und Bekanntmachung des Hinweises auf die Patenterteilung:
**08.11.2023 Patentblatt 2023/45**

(21) Anmeldenummer: **19829569.3**

(22) Anmeldetag: **19.12.2019**

(51) Internationale Patentklassifikation (IPC):
***C08G 18/48*** *(2006.01)* ***C08G 18/76*** *(2006.01)*
***C08G 18/79*** *(2006.01)* ***C08G 65/26*** *(2006.01)*

(52) Gemeinsame Patentklassifikation (CPC):
**C08G 18/4845; C08G 18/7671; C08G 18/797; C08G 65/2654**

(86) Internationale Anmeldenummer:
**PCT/EP2019/086432**

(87) Internationale Veröffentlichungsnummer:
**WO 2020/127814 (25.06.2020 Gazette 2020/26)**


(54) **KOMPAKTES POLYURETHAN**

COMPACT POLYURETHANE

POLYURÉTHANE COMPACT


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018 EP 18214431**

(43) Veröffentlichungstag der Anmeldung:
**27.10.2021 Patentblatt 2021/43**



(73) Patentinhaber: **BASF SE**
**67056 Ludwigshafen am Rhein (DE)**

(72) Erfinder:
- **EMGE, Andreas**
  **49448 Lemfoerde (DE)**
- **MEYER, Andre**
  **49448 Lemfoerde (DE)**
- **ZARBAKHSH, Sirus**
  **67056 Ludwigshafen am Rhein (DE)**

(74) Vertreter: **BASF IP Association**
**BASF SE**
**GBI-C006**
**67056 Ludwigshafen (DE)**



(56) Entgegenhaltungen:
**EP-A1- 1 803 756**

- **TORU MIYAJIMA ET AL: "Synthesis and process development of polyether polyol with high primary hydroxyl content using a new propoxylation catalyst", POLYMER JOURNAL, Bd. 47, Nr. 12, 26. August 2015 (2015-08-26), Seiten 771-778, XP055562433, JP ISSN: 0032-3896, DOI: 10.1038/pj.2015.64**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).





Processed by Luminess, 75001 PARIS (FR)

## Beschreibung

Die vorliegende Erfindung betrifft ein kompaktes Polyurethan aufweisend eine Dichte von ≥ 850 g/l, erhalten oder erhältlich durch Umsetzung mindestens der Komponenten: i) Polyisocyanatzusammensetzung; ii) Polyolzusammensetzung, umfassend mindestens ein Polyetherpolyol (ii.1), welches erhalten oder erhältlich ist durch Umsetzung von (ii.1.1) einem Polyol-Starter mit einer Funktionalität von 3 bis 6 mit (ii.1.2) Propylenoxid und/oder Butylenoxid, in Gegenwart eines Bor-basierten fluorhaltigen Lewis-Säure-Katalysators (ii.1.3), wobei das Polyetherpolyol (ii.1) ein Äquivalentmolekulargewicht von 50 bis 150 g/mol aufweist und gegebenenfalls weiteren Hilfs- und/oder Zusatzstoffen (ii.1.4). Die Erfindung betrifft weiterhin ein Verfahren zur Herstellung eines solchen kompakten Polyurethans bzw. nach diesem Verfahren erhaltenes oder erhältliches kompaktes Polyurethan. Weiterhin betrifft die Erfindung die Verwendung eines solchen kompakten Polyurethans aufweisend eine Dichte von ≥ 850 g/l für die Herstellung eines Faserverbundstoffes. Ebenso betrifft die Erfindung einen entsprechenden Faserverbundwerkstoff und ein Verfahren zur Herstellung eines solchen Faserverbundstoffs.

Polyurethane (PU) werden in einer Vielzahl an Verarbeitungsprozessen hergestellt und in einer großen Anzahl an unterschiedlichen Anwendungen verwendet (Guenter Oertel, Polyurethane Handbook: Chemistry - Raw Materials - Processing - Application - Properties - 1. Januar 1994). Harte, kompakte bzw. faserverstärkte Polyurethane werden aus hochfunktionellen Polyolen mit hoher Hydroxylzahl hergestellt (US 3,464,935 A) und sind hochvernetzte Polymere. Sie sollen in der Regel eine lange Verarbeitungszeit aufweisen, die im Bereich von 30 bis 240 Minuten liegt, was die Verwendung sehr reaktiver Ausgangsmaterialien ausschließt. Bezüglich der Materialeigenschaften sind hohe Schlagzähigkeit in Kombination mit hoher Härte und Zug- sowie Biegefestigkeit gefordert, eine Eigenschaftskombination, die schwierig zu erreichen ist. Darüber hinaus zeigt sich, dass kompakte Polyurethane, die unter Verwendung üblicher, auf Alkylenoxid-basierter Polyetherpolyolen bzw. OH-terminierten Polyesterolen (Polyesterpolyolen) in einer Umgebung mit hoher Luftfeuchtigkeit hergestellt werden, an der Bauteiloberfläche große Blasen und Defekte aufweisen, insbesondere wenn unter diesen Bedingungen Faserverbundwerkstoffe hergestellt werden. Die Ursache der Defekte ist die Anwesenheit von Feuchtigkeit in der Luft und auf den Fasern, was zu einer unerwünschten Reaktion mit dem Polyurethanreaktionsgemisch führt. U. a. aus diesem Grund werden in entsprechenden Prozessen derzeit bevorzugt Harze wie Epoxyde oder ungesättigte Polyester/Vinylester anstelle von Polyurethanen verwendet.

Für die Herstellung der erforderlichen Polyetherpolyole bzw. Polyesterole werden üblicherweise, im Hinblick auf die angestrebten Eigenschaften, Katalysatoren eingesetzt. Im industriellen Maßstab werden für die Herstellung von Polyetherolen basische Katalysatoren verwendet, am weitesten verbreitet ist KOH (M. Ionescu, Chemistry and Technology of Polyols, Rapra, 2005, S. 119 ff.). In EP 1 803 756 A1 werden Polyole beschrieben, die durch die Umsetzung von mehrfunktionellen Startern mit Propylenoxid erhalten werden, Katalysatoren für die Reaktion werden nicht erwähnt. Dort wird ein Reaktionsprodukt aus Sorbitol (Initiator) und Propylenoxid erzeugt. Das erhaltene Polyol weist in Abwesenheit kationischer Katalysatoren vorrangig sekundäre Hydroxyl-Gruppen auf, was im Vergleich zu Polyolen, welche durch den Einsatz von Lewissäuren als Katalysator einen höheren Anteil an primären Hydroxyl-Gruppen aufweisen, zu einem anderen Profil bezüglich Reaktivität und Hydrophobie führt. Weiterhin sind die verwendeten Polyole der EP 1 803 756 A1 hochviskos, so liegen die Viskositäten im Bereich von ca. 10.000 MPas (25 °C), was für die Prepolymere zu nochmals deutlich höheren Viskositäten führt. Eine solch hohe Viskosität des Harzes ist nachteilig beim Einsatz als Faserverbundwerkstoff: die Fließgeschwindigkeit bei der Imprägnierung der Fasern ist antiproportional der Viskosität (Gesetz von D'Arcy) (s. M. Neitzel, P. Mitschang, Handbuch Verbundwerkstoffe, Carl Hanser Verlag 2004, S. 164.) Aus den Polyolen der EP 1 803 756 A1 erzeugte Polyurethane weisen im Vergleich zu Polyurethanen, welchem mit Polyolen erzeugt sind, die mehr primäre Hydroxyl-Gruppen aufweisen, grundlegende Unterschiede im Hinblick auf Ihre Morphologie auf. So steht für gemäß EP 1 803 756 A1 erzeugte Polymere zu erwarten, dass sie, auch aufgrund des verwendeten Prepolymer-Ansatzes, aus hochfunktionellen Bereichen (das ehemalige Prepolymer) bestehen, die lose mit geringer Vernetzung miteinander verknüpft sind.

Es sind Polyetherole bekannt, die durch eine Lewissäure- bzw. Supersäure-katalysierte Alkoxylierung hergestellt wurden. Eine Herausforderung dieser Reaktionsführung ist das Entstehen erheblicher Mengen an Nebenprodukten in Form unerwünschter cyclischer Ether, die keine Hydroxylgruppen aufweisen und daher nicht am Aufbau des Polyurethans beteiligt sind und zu unangenehmen Gerüchen der Produkte führen können (M. Ionescu, Chemistry and Technology of Polyols, Rapra, 2005, S. 245-247).

Es sind Polyetherole bekannt, bei denen anstelle der gängigen Katalysatoren aus der Gruppe der Alkalimetalle bzw. Amine Tri(pentafluorphenyl)boran (TPB) als Alkoxylierungskatalysator eingesetzt wurde (T. Miyajima et al., Polymer Journal (2015) 47, 771-778). Diese Polyole weisen bei der Verwendung von Propylenoxid einen hohen Gehalt an primären Hydroxylgruppen auf, sind also deutlich reaktiver als die gängigen Polyetherole gleicher Zusammensetzung.

WO 2016/064698 A1 beschreibt die Herstellung von Polyolen mit hohen Molekulargewichten von mehr als 2500 g/mol und einem hohen Gehalt an primären Hydroxylgruppen unter Einsatz eines dualen Katalysators in einem zweistufigen Alkoxylierungsprozess.

US 6,531,566 B1 betrifft Polyoxyalkylen-Polyole oder Monoole mit einem hohen Gehalt an primären Hydroxylgruppen und deren Verwendung in der Herstellung duroplastischer Harze, wobei gemäß den Beispielen Glycerin-Propylenoxid-Addukte mit weiterem Propylenoxid unter Zusatz von Tri(pentafluorphenyl)boran umgesetzt werden, welche dann mit Isocyanaten zu Urethanschäumen oder Polyurethanelastomeren umgesetzt werden.

US 6,831,112 B2 beschreibt Polyetherpolyole, die unter Verwendung von Ethylenoxid (EO) erzeugt wurden und deren Verwendung für die Herstellung von Polyurethanhartschäumen. In den Beispielen wird ein Propylenoxid-Glycerin-Addukt in Gegenwart von Tri(pentafluorphenyl)boran mit weiterem Propylenoxid (PO) und Ethylenoxid umgesetzt und für die Herstellung von Polyurethanelastomeren bzw. -Schäumen verwendet.

JP 2014-167105 A offenbart Beispiele für Glycerin-gestartete Polyole, die ausschließlich mit Tri(pentafluorphenyl)boran (TPB) propoxyliert werden und eine Hydroxylzahl (OHZ) von 270 mg KOH/g aufweisen.

US 2003/0100623 A1 offenbart Polyole auf Basis Sorbitol (+ 9 PO und 1 EO), die eine OHZ von 450 mg KOH/g aufweisen, sowie analoge Polyole mit gleicher OHZ auf Basis Glycerin, Pentaerythrit, die ausschließlich mit TPB alkoxyliert werden, wobei fast ausschließlich Propylenoxid verwendet wird. In allen Beispielen wird der TPB-Katalysator anschließend entfernt. Weiterhin wird die Verwendung zur Herstellung von Hartschaumstoffen, die mit Wasser aufgeschäumt werden, beschrieben. Es wird somit ein Polyurethan beschrieben, das im Herstellprozess sowohl expandiert als auch vernetzt. Der Vernetzer muss dabei mit einem gewissen Wasseranteil sowie mit anderen hydrophilen Polyolen mischbar sein, was ein insgesamt hydrophiles Material ergibt, welches darüber hinaus auch noch spröde ist.

Nach dem Stand der Technik wird TPB-Katalyse somit weitgehend zur Herstellung langkettiger Polyetherole verwendet, die eine erhöhte Reaktivität aufweisen sollen. Diese Polyole werden verwendet in Kombination mit Wasser als Treibmittel zur Herstellung von Schaumstoffen. Damit müssen die entsprechenden Polyole -u.a. durch die Verwendung von EO - so hydrophil sein, dass Wasser mit ihnen mischbar ist. Bei den bekannten vernetzen Polyurethanen unter Verwendung von TPB-katalysierten Polyolen handelt es sich um Hartschaumstoffe, die nicht für ihre gute Schlagzähigkeit bekannt sind.

Die Anwendung der TPB-katalysierten Polyole zur Herstellung von kompakten, harten Polyurethanen erscheint aufgrund der Hydrophilie wenig vielversprechend. Für kompakte Polyurethane und Faserverbundmaterialien, die neben hoher Hydrophobie noch eine lange Verarbeitungszeit erfordern, ist die erhöhte Reaktivität unattraktiv. Der Einsatz von TPB-Polyolen für die Herstellung hochvernetzter, hydrophober, kompakter Polyurethane erschien daher nicht naheliegend.

Aufgabe der Erfindung war die Bereitstellung von vernetzten kompakten PU-Materialien, bei denen der Vernetzter wasserabweisend ist und mit hydrophoben statt mit hydrophilen Polyolen mischbar ist. Die PU-Materialien sollten auch bei sehr hoher Luftfeuchtigkeit zu blasenfreien kompakten Produkten verarbeitbar sein und gleichzeitig schlagzäh und nicht spröde wie beispielsweise Hartschäume sein.

Die Aufgabe wurde gelöst mit einem kompakten Polyurethan aufweisend eine Dichte von > 850 g/l, erhalten oder erhältlich durch Umsetzung mindestens der Komponenten:

i) Polyisocyanatzusammensetzung;
ii) Polyolzusammensetzung, umfassend mindestens ein Polyetherpolyol (ii.1), welches erhalten oder erhältlich ist durch Umsetzung von

ii.1.1)einem Polyol-Starter mit einer Funktionalität von 3 bis 6 mit
ii.1.2)Propylenoxid und/oder Butylenoxid,
in Gegenwart eines Bor-basierten fluorhaltigen Lewis-Säure-Katalysators (ii.1.3), wobei das Polyetherpolyol (ii.1) ein Äquivalentmolekulargewicht von 50 bis 150 g/mol aufweist,
ii.1.4) gegebenenfalls weiteren Hilfs- und/oder Zusatzstoffen.

Alle Angaben zur Dichte des kompakten Polyurethans bezieht sich jeweils auf das Polyurethan Reinharz, ohne Berücksichtigung von Füllstoffen, wobei die Dichte gemäß DIN EN ISO 1183-1 per Auftriebsverfahren bestimmt ist. Werden entsprechend der Erläuterungen zu (ii.1.4) Füllstoffe oder Fasern verwendet, verändern sich die angegebenen Dichten der erfindungsgemäßen Polyurethane entsprechend der Menge und der Dichte der verwendeten Füllstoffe.

## Kompaktes Polyurethan

Erfindungsgemäß wird gemäß (ii.1.1) als Polyol-Starter mindestens ein Polyol mit einer Funktionalität von 3 bis 6, bevorzugt 3 oder 4, eingesetzt, wobei erfindungsgemäß auch Mischungen von zwei oder mehr dieser Polyole umfasst sind. Unter einem "Polyol mit einer Funktionalität von 3 bis 6" wird ein Polyol verstanden, welches im Mittel pro Molekül im Bereich von 2,8 bis 3,0 bzw. im Bereich von 3,8 bis 4,0 bzw. im Bereich von 4,8 bis 5,0 bzw. im Bereich von 5,8 bis 6,0 Hydroxylgruppen aufweist. Ebenso wird unter einem "Polyol mit einer Funktionalität von 3 oder 4" ein Polyol verstanden, welches im Mittel pro Molekül im Bereich von 2,8 bis 3,0 bzw. im Bereich von 3,8 bis 4,0 Hydroxylgruppen aufweist. In der Praxis wird von der nominalen Funktionalität abgewichen, da verschiedene Nebenreaktionen während

der Polyol-Synthese zu einer Funktionalität führen können, die real niedriger sein kann als nominal angenommen (M. Ionescu, Chemistry and Technology of Polyols, Rapra, 2005, S. 67-75). Im Bereich des Äquivalentmolekulargewichts von 50 bis 150 g/mol wird davon ausgegangen, dass die Funktionalität sehr nahe bei 3 bzw. 4 bzw. 5 bzw. 6, bevorzugt sehr nahe bei 3 bzw. 4, liegt.

Das Äquivalentmolekulargewicht (ÄMG) ist definiert als der Quotient aus Molekulargewicht des Polyetherpolyols (M(Polyetherpolyol) und Funktionalität (F) des Polyetherpolyols:

$$\text{ÄMG} = \text{M(Polyetherpolyol)} / \text{F [g]}$$

Beispielsweise ergibt sich für ein Mol Glycerin, welches mit einem Mol Propylenoxid alkoxyliert ist, ein ÄMG von 50 g/eq basierend auf ÄMG= (150,2 g/mol) / (3 $mol^{-1}$).

In einer Ausführungsform des kompakten Polyurethans weist der Bor-basierte fluorhaltige Lewis-Säure-Katalysator gemäß (ii.1.3) die Formel $BR^1R^2R^3$ auf, wobei $R^1$, $R^2$ und $R^3$ jeweils unabhängig voneinander ausgewählt sind aus der Gruppe bestehend aus Fluoratom, perfluoriertem C1 bis C10-Alkylrest und perfluoriertem C6 bis C12-Arylrest, wobei bevorzugt $R^1$, $R^2$ und $R^3$ identisch sind, wobei weiter bevorzugt der Bor-basierte fluorhaltige Lewis-Säure-Katalysator gemäß (ii.1.3) ausgewählt ist aus Bortrifluorid ($BF_3$), Tris(pentafluorphenyl)boran $(C_6F_5)_3B$ und Mischungen von $BF_3$ und $(C_6F_5)_3B$, weiter bevorzugt Tris(pentafluorphenyl)boran ist.

Der Einsatz des Bor-basierten fluorhaltigen Lewis-Säure-Katalysators gemäß (ii.1.3) bei der Umsetzung von Polyol-Starter mit einer Funktionalität von 3 bis 6 (ii.1.1) und Propylenoxid und/oder Butylenoxid (ii.1.2) führt dazu, dass von den im Polyetherpolyol (ii.1) vorhandenen Hydroxyl-Gruppen ≥ 50%primäre Hydroxyl-Gruppen sind, d.h. maximal 50% der gebildeten Hydroxyl-Gruppen sind sekundäre Hydroxyl-Gruppen, jeweils bezogen auf die Gesamtheit aller Hydroxyl-Gruppen im Polyetherpolyol (ii.1).

In einer Ausführungsform des kompakten Polyurethans weist das Polyetherpolyol (ii.1) eine Hydroxylzahl von mehr als 400 mg KOH/g, bevorzugt von mehr als 450 mg KOH/g, weiter bevorzugt eine Hydroxylzahl im Bereich von 400 bis 1200 mg KOH/g, weiter bevorzugt im Bereich von 450 bis 1200 mg KOH/g, weiter bevorzugt im Bereich von 450 bis 1000 mg KOH/g, auf.

In einer Ausführungsform des kompakten Polyurethans weist das Polyetherpolyol (ii.1) ein Äquivalentmolekulargewicht im Bereich von 50 bis 140 g/mol, bevorzugt im Bereich von 55 bis 135 g/mol, weiter bevorzugt im Bereich von 60 bis 130 g/mol, auf.

Beispielsweise beträgt die Hydroxylzahl (OHZ) 405 mg KOH/g bzw. das Äquivalentmolekulargewicht ist 134 g, wenn im Triol der Formel (I) m, n und o = 6 sind. Eine OHZ von 1256 mg KOH/g bzw. ein Äquivalentmolekulargewicht von 45 g wird für TMP erhalten, wenn im Triol der Formel (I) l, m, n, o = 1 sind.

In einer Ausführungsform des kompakten Polyurethans ist der Polyol-Starter (ii.1.1) des Polyetherpolyols (ii.1) ein Triol mit einer Funktionalität von 3, bevorzugt ein Triol mit einer Funktionalität von 3 mit Ausnahme von Glycerin, weiter bevorzugt ein Triol der Formel (I)

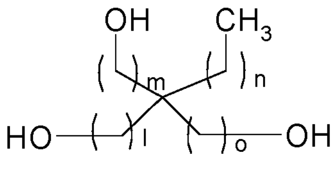

(I)

, wobei l, m, n und o jeweils unabhängig voneinander eine ganze Zahl aus dem Bereich von 1 bis 6 sind.

In einer Ausführungsform des kompakten Polyurethans sind l, m, n und o des mindestens einen Triols (ii.1.1) der Formel (I) jeweils unabhängig voneinander eine ganze Zahl aus dem Bereich von 1 bis 3, bevorzugt sind l, m, n und o alle 1. In einer Ausführungsform des kompakten Polyurethans weist das Triol (ii.1.1) eine Hydroxylzahl im Bereich von 200 bis 2000 mg KOH/g, bevorzugt im Bereich von 300 bis 1850 mg KOH/g, weiter bevorzugt im Bereich von 400 bis 1850 mg KOH/g, auf.

In einer Ausführungsform des kompakten Polyurethans weist das Polyetherpolyol (ii.1) keine auf Ethylenoxid-basierten Endgruppen, bevorzugt ausschließlich Propylenoxid-basierte Endgruppen und/oder Butylenoxid-basierte Endgruppen, auf. In einer Ausführungsform des kompakten Polyurethans weist das Polyetherpolyol (ii.1) ausschließlich Propylenoxid-basierte Endgruppen und/oder Butylenoxid-basierte Endgruppen auf und enthält keine auf Ethylenoxid-basierten Gruppen. In einer Ausführungsform des kompakten Polyurethans ist das Polyetherpolyol (ii.1) nur durch die Umsetzung eines Polyol-Starters, insbesondere Triol, (ii.1.1) und Propylenoxid bzw. Butylenoxid (ii.1.2), bevorzugt nur

durch die Umsetzung von Triol (ii.1.1) und Propylenoxid, erzeugt und es wird kein weiteres Alkylenoxid eingesetzt. Selbst bei Nicht-Verwendung von Ethylenoxid bzw. der ausschließlichen Verwendung von Propylenoxid bzw. Butylenoxid führt der Einsatz des erfindungsgemäßen Bor-basierten fluorhaltigen Lewis-Säure-Katalysators (ii.1.3) dazu, dass das mindestens eine Polyetherpolyol (ii.1) ≥ 50% primäre Hydroxyl-Gruppen aufweist, d.h. maximal 50% der Hydroxyl-Gruppen im Polyetherpolyol (ii.1) sind sekundäre Hydroxyl-Gruppen, jeweils bezogen auf die Gesamtheit aller Hydroxyl-Gruppen im Polyetherpolyol (ii.1).

In einer Ausführungsform des kompakten Polyurethans basiert das Polyetherpolyol (ii.1) au feinem Triol mit Ausnahme von Glycerin, bevorzugt auf einem Triol (ii.1.1) der Formel (I) wie oben beschrieben; bevorzugt weist das Polyetherpolyol (ii.1) die Formel (II) auf

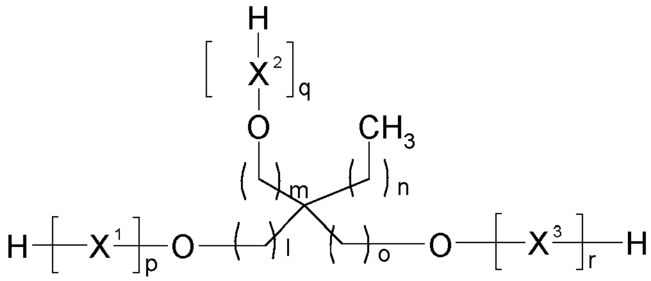

(II) ,

wobei

l, m, n und o jeweils unabhängig voneinander eine ganze Zahl aus dem Bereich von 1 bis 6 sind;

p, q und r jeweils unabhängig voneinander Null oder eine ganze Zahl aus dem Bereich von 1 bis 6, bevorzugt Null oder eine ganze Zahl aus dem Bereich von 1 bis 4, weiter bevorzugt Null oder eine ganze Zahl aus dem Bereich von 1 bis 3, sind; und

$X^1$, $X^2$ und $X^3$ unabhängig voneinander jeweils eine $-CH_2-CH(CH_3)-O$-Gruppe oder eine $-CH_2-CH(CH_2-CH_3)-O$-Gruppe sind. Bevorzugt sind $X^1$, $X^2$ und $X^3$ jeweils eine - $CH_2-CH(CH_3)-O$-Gruppe. Bevorzugt sind l, m, n und o alle 1 und p, q, r nehmen unabhängig voneinander Werte von 0 bis 2 an.

In einer Ausführungsform des kompakten Polyurethans erfolgt die Umsetzung von (ii.1.1) und (ii.1.2) ausschließlich in Gegenwart eines Bor-basierten fluorhaltigen Lewis-Säure-Katalysators (ii.1.3) und es werden keine weiteren Alkoxylierungs-Katalysatoren eingesetzt.

In einer Ausführungsform des kompakten Polyurethans erfolgt die Umsetzung von (ii.1.1) und (ii.1.2) ausschließlich in Gegenwart eines Bor-basierten fluorhaltigen Lewis-Säure-Katalysators (ii.1.3) in einem einstufigen Syntheseschritt. Der Bor-basierte fluorhaltige Lewis-Säure-Katalysator kann optional nach der Synthese des Polyetherols abgetrennt werden, verbleibt aber bevorzugt im Produkt.

Bevorzugt ist das mindestens eine Polyetherpolyol (ii.1) in der Polyolzusammensetzung gemäß (ii) zu 25 bis 95 Gewichts-% enthalten, bezogen auf das Gesamtgewicht der Polyolzusammensetzung gemäß (ii). In einer Ausführungsform des kompakten Polyurethans wird das Polyetherpolyol (ii.1) in 10 bis 50 Gewichts-%, bezogen auf ein Gesamtgewicht von Polyisocyanatzusammensetzung (i) und Polyolzusammensetzung (ii) von 100 Gewichts-%, eingesetzt. Polyisocyanatzusammensetzung (i) und Polyolzusammensetzung (ii) werden bevorzugt in einem Verhältnis eingesetzt, so dass das molare Verhältnis aus der Summe der Funktionalitäten der eingesetzten Polyolzusammensetzung (ii) zu der Summe der Funktionalitäten der eingesetzten Polyisocyanatzusammensetzung (i) im Bereich von 0,7 bis 2,1 liegt. Bevorzugt liegt das Verhältnis im Bereich von 0,8 bis 1,2. Ein Verhältnis von 1:1 entspricht dabei einem Isocyanatindex von 100.

Überraschenderweise konnte gezeigt werden, dass der Einsatz eines Polyols, welches durch Propoxylierung aus einem Triol, insbesondere TMP, unter Katalyse eines Bor-basierten fluorhaltigen Lewis-Säure-Katalysators, insbesondere Tris(pentafluorphenyl)boran, erzeugt worden war, kompakte Polyurethane ergab, welche eine verbesserte Schlagzähigkeit von mehr als 60 $KJ/m^2$, insbesondere mehr als 70 $KJ/m^2$, aufwiesen. Weiterhin war die Shore D-Härte vergleichbar zu der von Polyurethanen, welche mit anderen, KOH-katalysiert erzeugten Polyolen hergestellten worden waren. Überraschenderweise waren die kompakten Polyurethane, welche unter Einsatz eines Polyols, welches durch Propoxylierung aus einem Triol, insbesondere TMP, unter Katalyse eines Bor-basierten fluorhaltigen Lewis-Säure-Katalysators, insbesondere Tris(pentafluorphenyl)boran, hergestellt worden waren, deutlich verbessert im Hinblick auf ihre Zugfestigkeit, welche mehr als 80 MPa betrug.

Bei der Herstellung von Faserverbundstoffen konnte im Wickelversuch gezeigt werden, dass die Verwendung von kompakten Polyurethanen, welche unter Einsatz eines Polyols, welches durch Propoxylierung aus einem Triol, insbesondere TMP, unter Katalyse eines Bor-basierten fluorhaltigen Lewis-Säure-Katalysators, insbesondere Tris(pentafluorphenyl)boran, hergestellt worden waren, zu deutlich besseren Ergebnissen im Hinblick auf die Vermeidung einer unerwünschten Blasenbildung war: im Wickelversuch zeigte sich unter Verwendung der erfindungsgemäßen Polyole trotz hoher Luftfeuchtigkeit von 85 % keine bis maximal eine sehr geringe Blasenbildung bei der Herstellung der entsprechenden Bauteile, wohingegen der Einsatz von unter KOH-Katalyse erzeugten Polyole zum starken Schäumen führte, d.h. sich in großem Umfang unerwünschte Blasen bildeten.

Erfindungsgemäß wird gemäß (i) eine Polyisocyanatzusammensetzung eingesetzt. Die Polyisocyanatzusammensetzung enthält dabei mindestens ein Polyisocyanat. Erfindungsgemäß kann die Polyisocyanatzusammensetzung auch zwei oder mehr Polyisocyanate enthalten.

Das mindestens eine Polyisocyanat ist bevorzugt mindestens ein Diisocyanat, weiter bevorzugt ausgewählt aus der Gruppe bestehend aus aliphatischen, cycloaliphatischen, araliphatischen, aromatischen Diisocyanaten und Mischungen von zwei oder mehr dieser Diisocyanate. Im Einzelnen seien beispielhaft die folgenden aromatischen Diisocyanate genannt: 2,4-Toluol-diisocyanat, Gemische aus 2,4- und 2,6-Toluol-diisocyanat, 4,4'-, 2,4'- und/oder 2,2'-Diphenylmethan-diisocyanat (MDI), Gemische aus 2,4'- und 4,4'-Diphenylmethan-diisocyanat, urethan-, carbodiimid- oder uretonim-modifizierte flüssige 4,4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat oder Prepolymere aus diesen Isocyanaten und Polyolen oder Isocyanaten und isocyanatreaktiven Komponenten. Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-lsocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat oder Prepolymere dieser Isocyanate. Bevorzugt sind Isocyanatzusammensetzungen, die MDI enthalten.

Di- und Polyisocyanate (i) können auch in Form von Polyisocyanatprepolymeren eingesetzt werden. Diese Polyisocyanatprepolymere sind erhältlich, indem vorstehend beschriebene Polyisocyanate (i) im Überschuss, beispielsweise bei Temperaturen von 30 bis 100 °C, bevorzugt bei etwa 80 °C, mit Verbindungen mit mindestens zwei gegenüber Isocyanaten reaktiven Gruppen, zum Prepolymer umgesetzt werden. Der NCO-Gehalt erfindungsgemäßer Polyisocyanatprepolymere beträgt vorzugsweise von 15 bis 33 Gew.-% NCO, besonders bevorzugt von 25 bis 30 Gew.-% NCO.

Die Polyisocyanatzusammensetzung (i) weist eine Viskosität bei 25 °C im Bereich von 50 mPas bis 1000 mPas bevorzugt im Bereich von 50 mPas bis 500 mPas, weiter bevorzugt im Bereich von 50 mPas bis 300 mPas auf.

In einer Ausführungsform des kompakten Polyurethans umfasst die Polyolzusammensetzung ii) ein oder mehr weitere(s) Polyol(e), wobei das/die weitere(n) Polyole ausschließlich Polyole sind, welche ohne Alkalimetall-katalysierte bzw. Amin-katalysierte Alkoxylierung hergestellt wurden. Die Restmenge an Alkalimetallsalzen in der Polyolzusammensetzung ii) beträgt n < 0,5 ppm, bezogen auf das Gesamtgewicht der Polyolzusammensetzung ii).

In einer Ausführungsform des kompakten Polyurethans sind das/die weitere(n) Polyole ausgewählt aus der Gruppe bestehend aus hydroxylfunktionalisierten hydrophoben Verbindungen, fettchemischen Polyolen, Polyetherolen (Polyetherpolyolen), die in Gegenwart von Bor-haltigen Lewissäuren alkoxyliert wurden, optional Polyesterolen (Polyesterpolyolen) und optional Kettenverlängerern.

Bevorzugt sind alle Polyole der Polyolzusammensetzung (ii) ohne basischen oder aminischen Katalysator hergestellt. In einer bevorzugten Ausführungsform des kompakten Polyurethans enthält die Polyolzusammensetzung (ii) keine aminischen oder basischen Katalysatoren.

Bevorzugt umfasst die Polyolzusammensetzung gemäß (ii) ein oder mehrere weitere Polyole zusätzlich zum mindestens einen Polyetherpolyol (ii.1), wobei das/die weitere(n) Polyol(e) ausgewählt sind aus der Gruppe der hydroxylfunktionalisierten hydrophoben Verbindungen, wobei die hydroxylfunktionalisierten hydrophoben Verbindungen Kohlenwasserstoffgruppen mit vorzugsweise mehr als 6, besonders bevorzugt mehr als 8 und weniger als 100 und insbesondere mehr als 10 und weniger als 50 Kohlenstoffatomen und ein oder mehrere Hydroxylgruppen aufweisen. So können beispielsweise als Verbindungen mit mindestens zwei gegenüber Isocyanaten reaktiven Gruppen Polyether- oder Polyesterole eingesetzt werden. Vorzugsweise werden als Verbindungen mit mindestens zwei gegenüber Isocyanaten reaktiven Gruppen Polyether- oder Polyesterole, enthaltend sekundäre OH-Gruppen, eingesetzt, wie beispielsweise Polypropylenoxyd. Die Polyether- oder Polyesterole, besitzen dabei vorzugsweise eine Funktionalität von 2 bis 4, besonders bevorzugt von 2 bis 3 und einen Anteil an sekundären OH-Gruppen von mindestens 50 %, vorzugsweise mindestens 75 % und insbesondere mindestens 85 %. Als Verbindungen mit im Mittel mindestens 1,5 gegenüber Isocyanatgruppen reaktiven Wasserstoffatomen pro Molekül können alle in der Polyurethanchemie bekannten Verbindungen mit gegenüber Isocyanaten reaktiven Wasserstoffatomen eingesetzt werden

Beispiele für fettchemische Polyole sind u.a. beschrieben in M. Ionescu, Chemistry and Technology of Polyols,

Rapra, 2005, Kapitel 17.1. Als solche hydroxylfunktionalisierte hydrophobe Verbindung wird vorzugsweise eine hydroxylfunktionalisierte fettchemische Verbindung, d.h. ein fettchemisches Polyol, eingesetzt. In einer Ausführungsform des fettchemischen Polyols werden das Rizinusöl (Triglycerid-Gemisch) und dessen Derivate eingesetzt. Bevorzugte Derivate sind Umsetzungsprodukte mit Alkylenoxiden oder Keton-Formaldehyd-Harzen. Letztgenannte Verbindungen werden beispielsweise von der Covestro AG unter der Bezeichnung Desmophen® 1150 vertrieben. Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxidierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma BASF (als Sovermol®) bzw. der Firma Altropol Kunststoff GmbH als Neukapol® angeboten.

Weiterhin kann die Polyolzusammensetzung gemäß (ii) dem Fachmann bekannte Polyoltypen umfassen, wie Polybutadiene, auf Basis radkalisch oder anionisch polymeriserter Butadiene, Acrylatpolyole, Polysiloxanpolyole, Polyole erhältlich durch Mannichkondensation, aromatische Polyole, z.B. auf Basis Bisphenol A, Resorcinol, Novolak oder Melamin. Weitere Möglichkeiten sind Polytetrahydrofurane bzw. Polycaprolactone bzw. Copolymere aus diesen Ausgangsstoffe, Weitere Möglichkeiten sind Polymerpolyole, z.B. aus Basis von Triolen und Partikeln auf Basis Polystyrol, Styrol/Acrylnitril. Alle diese Polyoltypen sind bekannt z.B. aus M. Ionescu, Chemistry and Technology of Polyols, Rapra, 2005, S. 67-75.

In einer Ausführungsform des kompakten Polyurethans umfasst die Polyolzusammensetzung ii) optional Polyetherole, die beispielsweise hergestellt werden aus Epoxiden, wie Propylenoxid und/oder Ethylenoxid und/oder Butylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in WO 2006/034800 A1, EP 0090444 B1 oder WO 05/090440 A1 beschrieben.

In einer Ausführungsform des kompakten Polyurethans umfasst die Polyolzusammensetzung ii) optional Polyesterole, die z.B. hergestellt werden aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben. Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,2-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. $\varepsilon$-Caprolacton oder Hydroxycarbonsäuren, z.B. $\omega$-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, oder Argon in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein zahlenmittleres Molekulargewicht von 480 bis 3000, vorzugsweise 1000 bis 3000 g/mol.

In einer Ausführungsform des kompakten Polyurethans umfasst die Polyolzusammensetzung ii) optional Kettenverlängerer. Als Kettenverlängerer werden Substanzen mit einem Molekulargewicht von vorzugsweise kleiner 450 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Monoethylenglykol, 1,3-Propandiol, 1,10-Decandiol, 1,2-, 1,3-, 1,4-Dihydroxycyclohexan, Diethylenglykol, Dipropylenglykol, 1,4-Butandiol, 1,2-Butandiol, 1,6-Hexandiol und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer Monoethylenglycol, 1,4-Butandiol, 1,2-Butandiol, Diethylengylcol, Glycerin oder Mischungen davon eingesetzt.

Werden Kettenverlängerer und/oder Vernetzer eingesetzt, beträgt der Anteil der Kettenverlängerer und/ oder Vernetzer üblicherweise 1 bis 50, vorzugsweise 2 bis 20 Gew.-%, bezogen auf das Gesamtgewicht der Komponenten (ii). Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Weiter können optional Hilfsmittel und/oder Zusatzstoffe (ii.1.4) eingesetzt werden. Dabei können alle zur Herstellung von Polyurethanen bekannten Hilfs- und Zusatzstoffe verwendet werden. Genannt seien beispielsweise oberflächenaktive Substanzen, Treibmittel, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Als Zusatzstoffe können als Katalysatoren (ii.1.4) übliche Polyurethankatalysatoren eingesetzt werden. Diese beschleunigen die Reaktion der Verbindungen mit gegenüber Isocyanaten reaktiven Wasserstoffatome (b) mit den Di- und Polyisocyanaten (a) stark. Als übliche Katalysatoren, die zur Herstellung der Polyurethane eingesetzt werden können, seien beispielsweise Amidine, wie 2,3-Dimethyl-3,4,5,6-tetrahydropyrimidin, tertiäre Amine, wie Triethylamin, Tributylamin, Dimethylbenzylamin, Dimethylcyclohexylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin, genannt. Ebenso kommen organische Metallverbindungen in Betracht, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (ii.1.4) um einen Ester, werden vorzugsweise ausschließlich Aminkatalysatoren eingesetzt. Es können auch dem Fachmann bekannte sogenannte latente Katalysatoren verwendet werden, die bei Raumtemperatur keine oder nur eine geringe katalytische Aktivität aufweisen und erst z.B. durch Temperaturerhöhung aktiviert werden. Beispiele für diese Katalysatoren finden sich u.a. in DE 102008021980 A1 bzw. WO 2009/115540 A1.

Katalysatoren (ii.1.4) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (ii), eingesetzt werden.

In einer weiter bevorzugten Ausführungsform können die Hilfs und Zusatzstoffe (ii.1.4) basische Katalysatoren umfassen, die keine üblichen Polyurethanbildenden Katalysatoren sind. Diese umfassen beispielsweise die Polyisocyanuratbildung katalysierende Katalysatoren. Polyisocyanuratkatalysatoren umfassen Alkalimetallcarboxylate. Diese umfassen bevorzugt Formiate und Acetate, insbesondere Acetate, wie Natriumacetat und Kaliumacetat.

Eine weitere Art von Zusatzstoffen (ii.1.4) sind Entlüfter, die dem Fachmann bekannt sind, beispielsweise beschrieben in Thomas Brock, Michael Groteklaes, Peter Mischke: Lehrbuch der Lacktechnologie. Hrsg.: Ulrich Zorll, 2. Auflage, Vincentz Verlag, Hannover 2000, ISBN 978-3-87870-569-7, Kap. 2.4.2.1, Entschäumer und Entlüfter, S. 169 f.

In einer weiteren Ausführungsform können solche Komponenten (ii-1.4), die keine gegenüber Isocyanaten

reaktiven Wasserstoffatome enthalten auch der Polyisocyanatzusammensetzung (i) zugesetzt werden.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe mit Rohdichte > 850 g/l auf Basis von Polyisocyanat-Polyadditionsprodukten, insbesondere Polyurethanbeschichtungen.

In einer weiteren bevorzugten Ausführungsform ist das Polyurethan ein massives Polyurethan mit einer Dichte von vorzugsweise mehr als 850 g/l, vorzugsweise 850 bis 1400 g/l und besonders bevorzugt 850 bis 1100 g/l. Dabei wird ein massives Polyurethan ohne Zugabe eines Treibmittels erhalten. Geringe Mengen an Treibmittel, beispielsweise Wasser, das herstellungsbedingt in den Polyolen enthalten ist, ist dabei im Rahmen der vorliegenden Erfindung nicht als Treibmittelzugabe zu verstehen. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser. Vorzugsweise enthält das massive Polyurethan Füllstoffe, insbesondere faserförmige Füllstoffe. Geeignete Füllstoffe sind unter (ii.1.4) beschrieben.

Vorzugsweise erfolgt die Herstellung der Reaktionsmischung im zwei-Komponenten-Verfahren. Dazu werden Polyioscyanatzusammensetzung i) und Polyolzusammensetzung ii) vereinigt. Die Polyioscyanatzusammensetzung enthält Isocyanate und gegebenenfalls nicht-Isocyanatreaktive Bestandteile der Komponente (ii.1.4). Dabei wird die Zusammensetzung der Polyolzusammensetzung vorzugsweise so eingestellt, dass die Viskosität dieser bei 25 °C vorzugsweise kleiner als 2000 mPas ist. Dabei erfolgt die Viskositätsmessung anhand DIN 53019-1 bis 3. Dabei kann die Einstellung der Viskosität insbesondere über die Auswahl der Verbindung der Komponente (ii.1.4) sowie deren Einsatzmenge eingestellt werden. Insbesondere der Einsatz von dem Fachmann bekannten Stoffen wie Acrylaten oder Weichmachern ermöglicht eine Viskositätserniedrigung der Polyolkomponente.

Die Aushärtung des Reaktionsgemischs erfolgt bei Temperaturen von größer 80 °C, bevorzugt bei 80 °C bis 200 °C.

Verfahren zur Herstellung eines kompakten Polyurethans aufweisend eine Dichte von ≥ 850 g/l

Die Erfindung betrifft weiterhin ein Verfahren zur Herstellung eines kompakten Polyurethans aufweisend eine Dichte von ≥ 850 g/l umfassend die Umsetzung mindestens der Komponenten:

- i) Polyisocyanatzusammensetzung;
- ii) Polyolzusammensetzung, umfassend mindestens ein Polyetherpolyol (ii.1), welches erhalten oder erhältlich ist durch Umsetzung von
  - ii.1.1)einem Polyol-Starter mit einer Funktionalität von 3 bis 6, bevorzugt von 3 oder 4, mit
  - ii.1.2)Propylenoxid und/oder Butylenoxid,
  - in Gegenwart eines Bor-basierten fluorhaltigen Lewis-Säure-Katalysators (ii.1.3); wobei das Polyetherpolyol (ii.1) ein Äquivalentmolekulargewicht von 50 bis 150 g/mol aufweist,
  - ii.1.4) gegebenenfalls weiteren Hilfs- und/oder Zusatzstoffen.

Für die Polyisocyanatzusammensetzung (i) gilt, was bereits in der Sektion zum kompakten Polyurethan beschrieben ist.

In einer Ausführungsform des Verfahrens zur Herstellung eines kompakten Polyurethans aufweisend eine Dichte von ≥ 850 g/l weist das kompakte Polyurethan eine Dichte im Bereich von 850 bis 1250 g/l, bevorzugt eine Dichte im Bereich von 850 bis 1100 g/l auf.

In einer Ausführungsform des Verfahrens zur Herstellung eines kompakten Polyurethans aufweisend eine Dichte von ≥ 850 g/l weist der Bor-basierte fluorhaltige Lewis-Säure-Katalysator gemäß (ii.1.3) die Formel $BR^1R^2R^3$ auf, wobei $R^1$, $R^2$ und $R^3$ jeweils unabhängig voneinander ausgewählt sind aus der Gruppe bestehend aus Fluoratom, perfluoriertem C1 bis C10-Alkylrest und perfluoriertem C6 bis C12-Arylrest, wobei bevorzugt $R^1$, $R^2$ und $R^3$ identisch sind, wobei weiter bevorzugt der Bor-basierte fluorhaltige Lewis-Säure-Katalysator gemäß (ii.1.3) ausgewählt ist aus Bortrifluorid ($BF_3$), Tris(pentafluorphenyl)boran $(C_6F_5)_3B$ und Mischungen von $BF_3$ und $(C_6F_5)_3B$, weiter bevorzugt Tris(pentafluorphenyl)boran ist. Der Einsatz des Bor-basierten fluorhaltigen Lewis-Säure-Katalysators gemäß (ii.1.3) bei der Umsetzung von Polyol-Starter mit einer Funktionalität von 3 bis 6 (ii.1.1) und Propylenoxid und/oder Butylenoxid (ii.1.2) führt dazu, dass von den im Polyetherpolyol (ii.1) vorhandenen Hydroxyl-Gruppen ≥ 50% primäre Hydroxyl-Gruppen sind, d.h. maximal 50% der gebildeten Hydroxyl-Gruppen sind sekundäre Hydroxyl-Gruppen, jeweils bezogen auf die Gesamtheit aller Hydroxyl-Gruppen im Polyetherpolyol (ii.1). In einer Ausführungsform des Verfahrens zur Herstellung eines kompakten Polyurethans aufweisend eine Dichte von ≥ 850 g/l weist das Polyetherpolyol (ii.1) eine Hydroxylzahl von mehr als 400 mg KOH/g, bevorzugt von mehr als 450 mg KOH/g, weiter bevorzugt eine Hydroxylzahl im Bereich von 400 bis 1200 mg KOH/g, weiter bevorzugt im Bereich von 450 bis 1200 mg KOH/g, weiter bevorzugt im

Bereich von 450 bis 1000 mg KOH/g, auf.

In einer Ausführungsform des Verfahrens zur Herstellung eines kompakten Polyurethans aufweisend eine Dichte von ≥ 850 g/l weist das Polyetherpolyol (ii.1) ein Äquivalentmolekulargewicht im Bereich von 50 bis 140 g/mol, bevorzugt im Bereich von 55 bis 135 g/mol, weiter bevorzugt im Bereich von 60 bis 130 g/mol, auf.

In einer Ausführungsform des Verfahrens zur Herstellung eines kompakten Polyurethans aufweisend eine Dichte von ≥ 850 g/l wird das Polyetherpolyol (ii.1) in 10 bis 50 Gewichts-%, bezogen auf ein Gesamtgewicht von Polyisocyanatzusammensetzung (i) und Polyolzusammensetzung (ii) von 100 Gewichts-%, eingesetzt. Polyisocyanatzusammensetzung (i) und Polyolzusammensetzung (ii) werden bevorzugt in einem Verhältnis eingesetzt, so dass das molare Verhältnis aus der Summe der Funktionalitäten der eingesetzten Polyolzusammensetzung (ii) zu der Summe der Funktionalitäten der eingesetzten Polyisocyanatzusammensetzung (i) im Bereich von 0,7 bis 2,1 liegt. Bevorzugt liegt das Verhältnis im Bereich von 0,8 bis 1,2. Ein Verhältnis von 1:1 entspricht dabei einem Isocyanatindex von 100.

In einer Ausführungsform des Verfahrens zur Herstellung eines kompakten Polyurethans aufweisend eine Dichte von ≥ 850 g/l ist der Polyol-Starter (ii.1.1) des Polyetherpolyols gemäß (ii.1) ein Triol ist mit einer Funktionalität von 3, bevorzugt ein Triol mit einer Funktionalität von 3 mit Ausnahme von Glycerin, weiter bevorzugt ein Triol der Formel (I)

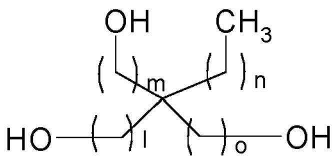

(I)

, wobei l, m, n und o jeweils unabhängig voneinander eine ganze Zahl aus dem Bereich von 1 bis 6 sind. Bevorzugt sind l, m, n und o des mindestens einen Triols (ii.1.1) der Formel (I) jeweils unabhängig voneinander eine ganze Zahl aus dem Bereich von 1 bis 3, weiter bevorzugt sind l, m, n und o alle 1.

In einer Ausführungsform des Verfahrens zur Herstellung eines kompakten Polyurethans aufweisend eine Dichte von ≥ 850 g/l weist das Triol (ii.1.1) eine Hydroxylzahl im Bereich von 200 bis 2000 mg KOH/g, bevorzugt im Bereich von 300 bis 1850 mg KOH/g, weiter bevorzugt im Bereich von 400 bis 1850 mg KOH/g, auf.

In einer Ausführungsform des Verfahrens zur Herstellung eines kompakten Polyurethans aufweisend eine Dichte von ≥ 850 g/l basiert das Polyetherpolyol (ii.1) auf einem Triol mit Ausnahme von Glycerin, bevorzugt auf einem Triol (ii.1.1) der Formel (I) wie oben gezeigt; weiter bevorzugt weist das Polyetherpolyol (ii.1) die Formel (II) auf

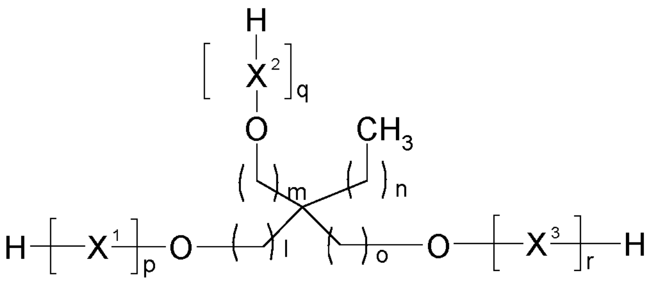

(II) ,

wobei

- l, m, n und o jeweils unabhängig voneinander eine ganze Zahl aus dem Bereich von 1 bis 6 sind;
- p, q und r jeweils unabhängig voneinander Null oder eine ganze Zahl aus dem Bereich von 1 bis 6, bevorzugt Null oder eine ganze Zahl aus dem Bereich von 1 bis 4, weiter bevorzugt Null oder eine ganze Zahl aus dem Bereich von 1 bis 3, sind; und
- $X^1$, $X^2$ und $X^3$ unabhängig voneinander jeweils eine $-CH_2-CH(CH_3)-O$-Gruppe oder eine $-CH_2-CH(CH_2-CH_3)-O$-Gruppe sind. Bevorzugt sind $X^1$, $X^2$ und $X^3$ jeweils eine $-CH_2-CH(CH_3)-O$-Gruppe. Bevorzugt sind l, m, n und o alle 1 und p, q, r nehmen unabhängig voneinander Werte von 0 bis 2 an.

In einer Ausführungsform des Verfahrens zur Herstellung eines kompakten Polyurethans aufweisend eine Dichte von ≥ 850 g/l beträgt die Restmenge an Alkalimetallsalzen in der Polyolzusammensetzung ii) n < 0,5 ppm, bezogen auf das Gesamtgewicht der Polyolzusammensetzung ii).

Gemäß einer Ausführungsform des Verfahrens zur Herstellung eines kompakten Polyurethans aufweisend eine Dichte von ≥ 850 g/l erfolgt die Umsetzung von (ii.1.1) und (ii.1.2) ausschließlich in Gegenwart eines Bor-basierten fluorhaltigen Lewis-Säure-Katalysators (ii.1.3) und es werden keine weiteren Alkoxylierungs-Katalysatoren eingesetzt. In einer Ausführungsform des Verfahrens zur Herstellung eines kompakten Polyurethans aufweisend eine Dichte von ≥ 850 g/l erfolgt die Umsetzung von (ii.1.1) und (ii.1.2) ausschließlich in Gegenwart eines Bor-basierten fluorhaltigen Lewis-Säure-Katalysators (ii.1.3) in einem einstufigen Syntheseschritt. Der Bor-basierte fluorhaltige Lewis-Säure-Katalysator kann optional nach der Synthese des Polyetherols abgetrennt werden, verbleibt aber bevorzugt im Produkt.

Gemäß einer weiteren Ausführungsform des Verfahrens zur Herstellung eines kompakten Polyurethans aufweisend eine Dichte von ≥ 850 g/l weist das Polyetherpolyol (ii.1) keine auf Ethylenoxid-basierten Endgruppen, bevorzugt ausschließlich Propylenoxid-basierte Endgruppen und/oder Butylenoxid-basierte Endgruppen, auf. Bevorzugt weist das Polyetherpolyol (ii.1) ausschließlich Propylenoxid-basierte Endgruppen und/oder Butylenoxid-basierte Endgruppen auf und enthält keine auf Ethylenoxid-basierten Gruppen. Selbst bei Nicht-Verwendungvon Ethylenoxid bzw. der ausschließlichen Verwendung von Propylenoxid bzw. Butylenoxid führt der Einsatz des erfindungsgemäßen Bor-basierten fluorhaltigen Lewis-Säure-Katalysators (ii.1.3) dazu, dass das mindestens eine Polyetherpolyol (ii.1) ≥ 50% primäre Hydroxyl-Gruppen aufweist, d.h. maximal 50% der Hydroxyl-Gruppen im Polyetherpolyol (ii.1) sind sekundäre Hydroxyl-Gruppen, jeweils bezogen auf die Gesamtheit aller Hydroxyl-Gruppen im Polyetherpolyol (ii.1).

Gemäß einer weiteren Ausführungsform des Verfahrens zur Herstellung eines kompakten Polyurethans aufweisend eine Dichte von ≥ 850 g/l ist das Polyetherpolyol (ii.1) nur durch die Umsetzung eines Polyol-Starters, insbesondere Triol, (ii.1.1) und Propylenoxid bzw. Butylenoxid (ii.1.2), bevorzugt nur durch die Umsetzung von Triol (ii.1.1) und Propylenoxid, erzeugt und kein weiteres Alkylenoxid wird eingesetzt.

In einer Ausführungsform des Verfahrens zur Herstellung eines kompakten Polyurethans aufweisend eine Dichte von ≥ 850 g/l umfasst die Polyolzusammensetzung ii) ein oder mehrere weitere(s) Polyol(e), wobei das/die weitere(n) Polyole ausschließlich Polyole sind, welche ohne Alkalimetall-katalysierte bzw. Amin-katalysierte Alkoxylierung hergestellt wurden. Das/die weitere(n) Polyole sind bevorzugt ausgewählt aus der Gruppe bestehend aus hydroxylfunktionalisierten hydrophoben Verbindungen, fettchemischen Polyolen, Polyetherolen (Polyetherpolyolen), die in Gegenwart von Bor-haltigen Lewissäuren alkoxyliert wurden, optional Polyesterolen (Polyesterpolyolen) und optional Kettenverlängerern. Details hierzu sind eingangs bereits zum kompakten Polyurethan erläutert; diese gelten ebenfalls für das hier beschriebene Herstellungsverfahren.

In einer Ausführungsform des Verfahren zur Herstellung eines kompakten Polyurethans aufweisend eine Dichte von ≥ 850 g/l sind alle Polyole der Polyolzusammensetzung (ii) ohne basischen oder aminischen Katalysator hergestellt. In einer Ausführungsform des Verfahrens zur Herstellung eines kompakten Polyurethans aufweisend eine Dichte von ≥ 850 g/l enthält die Polyolkomponente ii) keine aminischen oder basischen Katalysatoren, die die Polyurethanreaktion katalysieren.

Die Erfindung betrifft weiterhin ein kompaktes Polyurethan aufweisend eine Dichte von ≥ 850 g/l erhalten oder erhältlich nach dem voranstehend beschriebenen Verfahren.

Verwendung eines kompakten Polyurethans aufweisend eine Dichte von ≥ 850 g/l für die Herstellung eines Faserverbundstoffes

Des Weiteren betrifft die Erfindung die Verwendung eines kompakten Polyurethans aufweisend eine Dichte von ≥ 850 g/l, erhalten oder erhältlich durch Umsetzung mindestens der Komponenten:

i) Polyisocyanatzusammensetzung;
ii) Polyolzusammensetzung, umfassend mindestens ein Polyetherpolyol (ii.1), welches erhalten oder erhältlich ist durch Umsetzung von

ii.1.1)einem Polyol-Starter mit einer Funktionalität von 3 bis 6, bevorzugt 3 oder 4, mit
ii.1.2)Propylenoxid und/oder Butylenoxid,
in Gegenwart eines Bor-basierten fluorhaltigen Lewis-Säure-Katalysators (ii.1.3), wobei das Polyetherpolyol (ii.1) ein Äquivalentmolekulargewicht von 50 bis 150 g/mol aufweist,
ii.1.4) gegebenenfalls weiteren Hilfs- und/oder Zusatzstoffen;

für die Herstellung eines Faserverbundstoffes, bevorzugt für die Imprägnierung von Fasern.

Für die Polyisocyanatzusammensetzung (i) gilt im Hinblick auf die Verwendung des kompakten Polyurethans aufweisend eine Dichte von ≥ 850 g/l, was bereits in der Sektion zum kompakten Polyurethan beschrieben ist.

In einer Ausführungsform der Verwendung eines kompakten Polyurethans aufweisend eine Dichte von ≥ 850 g/l für die Herstellung eines Faserverbundstoffes weist das kompakte Polyurethan eine Dichte im Bereich von 850 bis 1250 g/l, bevorzugt eine Dichte im Bereich von 850 bis 1100 g/l, auf.

In einer Ausführungsform der Verwendung eines kompakten Polyurethans aufweisend eine Dichte von ≥ 850 g/l für die Herstellung eines Faserverbundstoffes weist der Bor-basierte fluorhaltige Lewis-Säure-Katalysator gemäß (ii.1.3) die Formel $BR^1R^2R^3$ auf, wobei $R^1$, $R^2$ und $R^3$ jeweils unabhängig voneinander ausgewählt sind aus der Gruppe bestehend aus Fluoratom, perfluoriertem C1 bis C10-Alkylrest und perfluoriertem C6 bis C12-Arylrest, wobei bevorzugt $R^1$, $R^2$ und $R^3$ identisch sind, wobei weiter bevorzugt der Bor-basierte fluorhaltige Lewis-Säure-Katalysator gemäß (ii.1.3) ausgewählt ist aus Bortrifluorid ($BF_3$), Tris(pentafluorphenyl)boran $(C_6F_5)_3B$ und Mischungen von $BF_3$ und $(C_6F_5)_3B$, weiter bevorzugt Tris(pentafluorphenyl)boran ist. Der Einsatz des Bor-basierten fluorhaltigen Lewis-Säure-Katalysators gemäß (ii.1.3) bei der Umsetzung von Polyol-Starter mit einer Funktionalität von 3 bis 6 (ii.1.1) und Propylenoxid und/oder Butylenoxid (ii.1.2) führt dazu, dass von den im Polyetherpolyol (ii.1) vorhandenen Hydroxyl-Gruppen ≥ 50% primäre Hydroxyl-Gruppen sind, d.h. maximal 50 der gebildeten Hydroxyl-Gruppen sind sekundäre Hydroxyl-Gruppen, jeweils bezogen auf die Gesamtheit aller Hydroxyl-Gruppen im Polyetherpolyol (ii.1).

In einer Ausführungsform der Verwendung eines kompakten Polyurethans aufweisend eine Dichte von ≥ 850 g/l für die Herstellung eines Faserverbundstoffes weist das Polyetherpolyol (ii.1) eine Hydroxylzahl von mehr als 400 mg KOH/g, bevorzugt von mehr als 450 mg KOH/g, weiter bevorzugt eine Hydroxylzahl im Bereich von 400 bis 1200 mg KOH/g, weiter bevorzugt im Bereich von 450 bis 1200 mg KOH/g, weiter bevorzugt im Bereich von 450 bis 1000 mg KOH/g, auf. In einer Ausführungsform der Verwendung eines kompakten Polyurethans aufweisend eine Dichte von ≥ 850 g/l für die Herstellung eines Faserverbundstoffes weist das Polyetherpolyol (ii.1) ein Äquivalentmolekulargewicht im Bereich von 50 bis 140 g/mol, bevorzugt im Bereich von 55 bis 135 g/mol, weiter bevorzugt im Bereich von 60 bis 130 g/mol, auf.

In einer Ausführungsform der Verwendung eines kompakten Polyurethans aufweisend eine Dichte von ≥ 850 g/l für die Herstellung eines Faserverbundstoffes wird das Polyetherpolyol (ii.1) in 10 bis 50 Gewichts-%, bezogen auf ein Gesamtgewicht von Polyisocyanatzusammensetzung (i) und Polyolzusammensetzung (ii) von 100 Gewichts-%, eingesetzt.

In einer Ausführungsform der Verwendung eines kompakten Polyurethans aufweisend eine Dichte von ≥ 850 g/l für die Herstellung eines Faserverbundstoffes ist der Polyol-Starter (ii.1.1) des Polyetherpolyols gemäß (ii.1) ein Triol mit einer Funktionalität von 3, bevorzugt ein Triol mit einer Funktionalität von 3 mit Ausnahme von Glycerin, weiter bevorzugt ein Triol der Formel (I)

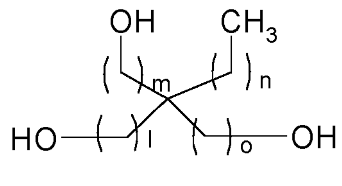

(I)

ist, wobei l, m, n und o jeweils unabhängig voneinander eine ganze Zahl aus dem Bereich von 1 bis 6 sind.

In einer Ausführungsform der Verwendung eines kompakten Polyurethans aufweisend eine Dichte von ≥ 850 g/l für die Herstellung eines Faserverbundstoffes sind l, m, n und o des mindestens ein Triols (ii.1.1) der Formel (I) jeweils unabhängig voneinander eine ganze Zahl aus dem Bereich von 1 bis 3, bevorzugt sind l, m, n und o alle 1.

In einer Ausführungsform der Verwendung eines kompakten Polyurethans aufweisend eine Dichte von ≥ 850 g/l für die Herstellung eines Faserverbundstoffes weist das Triol (ii.1.1) eine Hydroxylzahl im Bereich von 200 bis 2000 mg KOH/g, bevorzugt im Bereich von 300 bis 1850 mg KOH/g, weiter bevorzugt im Bereich von 400 bis 1850 mg KOH/g, auf.

In einer Ausführungsform der Verwendung eines kompakten Polyurethans aufweisend eine Dichte von ≥ 850 g/l für die Herstellung eines Faserverbundstoffes basiert das Polyetherpolyol (ii.1) auf einem Triol mit Ausnahme von Glycerin, bevorzugt auf einem Triol (ii.1.1) der Formel (I) wie oben beschrieben, und weist weiter bevorzugt die Formel (II) auf,

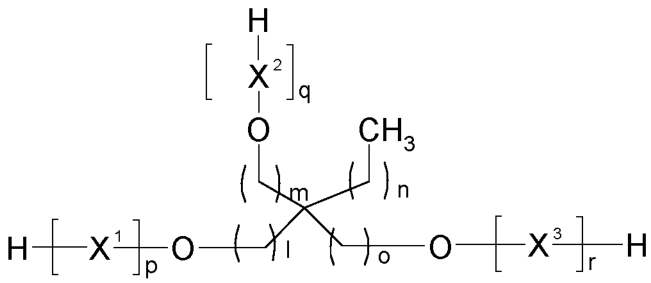

(II) ,

wobei

l, m, n und o jeweils unabhängig voneinander eine ganze Zahl aus dem Bereich von 1 bis 6 sind; p, q und r jeweils unabhängig voneinander Null oder eine ganze Zahl aus dem Bereich von 1 bis 6, bevorzugt Null oder eine ganze Zahl aus dem Bereich von 1 bis 4, weiter bevorzugt Null oder eine ganze Zahl aus dem Bereich von 1 bis 3, sind; und $X^1$, $X^2$ und $X^3$ unabhängig voneinander jeweils eine $-CH_2-CH(CH_3)-O-$Gruppe oder eine - $CH_2-CH(CH_2-CH_3)-O-$Gruppe, bevorzugt $X^1$, $X^2$ und $X^3$ jeweils eine- $CH_2-CH(CH_3)-O-$Gruppe sind. Bevorzugt sind l, m, n und o alle 1 und p, q, r nehmen unabhängig voneinander Werte von 0 bis 2 an.

In einer Ausführungsform der Verwendung eines kompakten Polyurethans aufweisend eine Dichte von ≥ 850 g/l für die Herstellung eines Faserverbundstoffes erfolgt die Umsetzung von (ii.1.1) und (ii.1.2) ausschließlich in Gegenwart eines Bor-basierten fluorhaltigen Lewis-Säure-Katalysators (ii.1.3) und es werden keine weiteren Alkoxylierungs-Katalysatoren eingesetzt. In einer Ausführungsform der Verwendung eines kompakten Polyurethans aufweisend eine Dichte von ≥ 850 g/l erfolgt die Umsetzung von (ii.1.1) und (ii.1.2) ausschließlich in Gegenwart eines Bor-basierten fluorhaltigen Lewis-Säure-Katalysators (ii.1.3) in einem einstufigen Syntheseschritt. Der Bor-basierte fluorhaltige Lewis-Säure-Katalysator kann optional nach der Synthese des Polyetherols abgetrennt werden, verbleibt aber bevorzugt im Produkt.

In einer Ausführungsform der Verwendung eines kompakten Polyurethans aufweisend eine Dichte von ≥ 850 g/l für die Herstellung eines Faserverbundstoffes weist das Polyetherpolyol (ii.1) keine auf Ethylenoxid-basierten Endgruppen, bevorzugt ausschließlich Propylenoxid-basierte Endgruppen und/oder Butylenoxid-basierte Endgruppen, auf. Bevorzugt enthält das Polyetherpolyol (ii.1) ausschließlich Propylenoxid-basierte Endgruppen und/oder Butylenoxid-basierte Endgruppen aufweist und keine auf Ethylenoxid-basierten Gruppen. Weiter bevorzugt ist das Polyetherpolyol (ii.1) nur durch die Umsetzung von Polyol-Starter, insbesondere Triol, (ii.1.1) und Propylenoxid bzw. Butylenoxid (ii.1.2) erzeugt und es wird kein weiteres Alkylenoxid eingesetzt. Selbst bei Nicht-Verwendung von Ethylenoxid bzw. der ausschließlichen Verwendung von Propylenoxid bzw. Butylenoxid führt der Einsatz des erfindungsgemäßen Bor-basierten fluorhaltigen Lewis-Säure-Katalysators (ii.1.3) dazu, dass das mindestens eine Polyetherpolyol (ii.1) w ≥ 50% primäre Hydroxyl-Gruppen aufweist, d.h. maximal 50% der Hydroxyl-Gruppen im Polyetherpolyol (ii.1) sind sekundäre Hydroxyl-Gruppen, jeweils bezogen auf die Gesamtheit aller Hydroxyl-Gruppen im Polyetherpolyol (ii.1).

In einer Ausführungsform der Verwendung eines kompakten Polyurethans aufweisend eine Dichte von ≥ 850 g/l für die Herstellung eines Faserverbundstoffes umfasst die Polyolzusammensetzung ii) ein oder mehr weitere(s) Polyol(e), wobei das/die weitere(n) Polyole ausschließlich Polyole sind, welche ohne Alkalimetall-katalysierte bzw. Amin-katalysierte Alkoxylierung hergestellt wurden.

In einer Ausführungsform des Verwendung eines kompakten Polyurethans aufweisend eine Dichte von ≥ 850 g/l für die Herstellung eines Faserverbundstoffes ist/ sind das/die weitere(n) Polyole ausgewählt aus der Gruppe bestehend aus hydroxylfunktionalisierten hydrophoben Verbindungen, fettchemischen Polyolen, Polyetherpolyole, die in Gegenwart von Bor-haltigen Lewissäuren alkoxyliert wurden, optional Polyesterpolyolen und optional Kettenverlängerern. Details zu den eingesetzten hydroxylfunktionalisierten hydrophoben Verbindungen, fettchemischen Polyolen, Polyetherpolyolen, die in Gegenwart von Bor-haltigen Lewissäuren alkoxyliert wurden, optionalen Polyesterpolyolen und optionalen Kettenverlängerern sind eingangs bereits zum kompakten Polyurethan erläutert; diese Details gelten ebenfalls für die hier beschriebene Verwendung. Alle Polyole der Polyolzusammensetzung (ii) sind ohne basischen oder aminischen Katalysator hergestellt; die Polyolzusammensetzung (ii) enthält keine aminischen oder basischen Katalysatoren.

In einer Ausführungsform der Verwendung umfasst die Polyolzusammensetzung ii) ein oder mehr weitere(s) Polyol(e) als hydroxylfunktionalisierte hydrophobe Verbindung(en), wobei alle Polyole ausschließlich ohne Alkalimetall-katalysierte bzw. Amin-katalysierte Alkoxylierung hergestellt wurden. Spuren an KOH/CsOH/Aminen können als Katalysatoren zur Herstellung von PU bzw. auch zur Reaktion von Wasser und Isocyanat wirken. Daher wird erfindungsgemäß

mit solchen Polyolen bzw. Rohstoffen gearbeitet, die diese Komponenten nicht enthalten. Auch der Einsatz von mit KOH-Katalyse hergestellten Polyolen, die anschließend so aufgereinigt wurden, dass das Salz weitgehend entfernt wird, führt bei der Umsetzung mit Isocyanaten bei hoher Luftfeuchtigkeit zu schäumenden Material.

In einer Ausführungsform der Verwendung beträgt die Restmenge an Alkalimetallsalzen in der Polyolzusammensetzung ii) n < 0,5 ppm, bezogen auf das Gesamtgewicht der Polyolzusammensetzung ii).

Dabei wird die Zusammensetzung der Polyolkomponente vorzugsweise so eingestellt, dass die Viskosität dieser bei 25 °C vorzugsweise kleiner als 1000 mPas ist.

Faserverbundwerkstoff

Die Erfindung betrifft weiterhin einen Faserverbundwerkstoff umfassend die folgenden Komponenten:

a) ein kompaktes Polyurethan aufweisend eine Dichte von ≥ 850 g/l, erhalten oder erhältlich durch Umsetzung mindestens der Komponenten:

i) Polyisocyanatzusammensetzung;
ii) Polyolzusammensetzung, umfassend mindestens ein Polyetherpolyol (ii.1) welches erhalten oder erhältlich ist durch Umsetzung von

ii.1.1)einem Polyol-Starter mit einer Funktionalität von 3 bis 6, bevorzugt 3 oder 4, mit
ii.1.2)Propylenoxid und/oder Butylenoxid,
in Gegenwart eines Bor-basierten fluorhaltigen Lewis-Säure-Katalysators (ii.1.3), wobei das Polyetherpolyol (ii.1) ein Äquivalentmolekulargewicht von 50 bis 150 g/mol aufweist,
ii.1.4) gegebenenfalls weiteren Hilfs- und/oder Zusatzstoffen;

b) Fasern, welche zumindest teilweise in das kompakte Polyurethan eingebettet vorliegen.

In einer Ausführungsform des Faserverbundstoffs ist das kompakte Polyurethan erhalten oder erhältlich durch Umsetzung der Komponenten (i), (ii) und als Zusatzstoff ii.1.4) mindestens ein Entlüfter. Für die Polyisocyanatzusammensetzung (i) gilt im Hinblick auf Faserverbundstoff was bereits in der Sektion zum kompakten Polyurethan beschrieben ist.

In einer Ausführungsform des Faserverbundstoffs weist das kompakte Polyurethan eine Dichte im Bereich von 850 bis 1250 g/l, bevorzugt eine Dichte im Bereich von 850 bis 1100 g/l, auf.

In einer Ausführungsform des Faserverbundstoffs weist der Bor-basierte fluorhaltige Lewis-Säure-Katalysator gemäß (ii.1.3) die Formel $BR^1R^2R^3$ auf, wobei $R^1$, $R^2$ und $R^3$ jeweils unabhängig voneinander ausgewählt sind aus der Gruppe bestehend aus Fluoratom, perfluoriertem C1 bis C10-Alkylrest und perfluoriertem C6 bis C12-Arylrest, wobei bevorzugt $R^1$, $R^2$ und $R^3$ identisch sind, wobei weiter bevorzugt der Bor-basierte fluorhaltige Lewis-Säure-Katalysator gemäß (ii.1.3) ausgewählt ist aus Bortrifluorid ($BF_3$), Tris(pentafluorphenyl)boran $(C_6F_5)_3B$ und Mischungen von $BF_3$ und $(C_6F_5)_3B$, weiter bevorzugt Tris(pentafluorphenyl)boran ist. Der Einsatz des Bor-basierten fluorhaltigen Lewis-Säure-Katalysators gemäß (ii.1.3) bei der Umsetzung von Polyol-Starter mit einer Funktionalität von 3 bis 6 (ii.1.1) und Propylenoxid und/oder Butylenoxid (ii.1.2) führt dazu, dass von den im Polyetherpolyol (ii.1) vorhandenen Hydroxyl-Gruppen ≥ 50% primäre Hydroxyl-Gruppen sind, d.h. maximal 50%der gebildeten Hydroxyl-Gruppen sind sekundäre Hydroxyl-Gruppen, jeweils bezogen auf die Gesamtheit aller Hydroxyl-Gruppen im Polyetherpolyol (ii.1).

In einer Ausführungsform des Faserverbundstoffs weist Polyetherpolyol (ii.1) eine Hydroxylzahl von mehr als 400 mg KOH/g, bevorzugt von mehr als 450 mg KOH/g, weiter bevorzugt eine Hydroxylzahl im Bereich von 400 bis 1200 mg KOH/g, weiter bevorzugt im Bereich von 450 bis 1200 mg KOH/g, weiter bevorzugt im Bereich von 450 bis 1000 mg KOH/g, auf. In einer Ausführungsform des Faserverbundstoffs das weist Polyetherpolyol (ii.1) ein Äquivalentmolekulargewicht im Bereich von 50 bis 140 g/mol, bevorzugt im Bereich von 55 bis 135 g/mol, weiter bevorzugt im Bereich von 60 bis 130 g/mol, auf.

In einer Ausführungsform des Faserverbundstoffs wird das Polyetherpolyol (ii.1) in 10 bis 50 Gewichts-%, bezogen auf ein Gesamtgewicht von Polyisocyanatzusammensetzung (i) und Polyolzusammensetzung (ii) von 100 Gewichts-%, eingesetzt.

In einer Ausführungsform des Faserverbundstoffs ist der Polyol-Starter (ii.1.1) des Polyetherpolyols gemäß (ii.1) ein Triol mit einer Funktionalität von 3, bevorzugt ein Triol mit einer Funktionalität von 3 mit Ausnahme von Glycerin, weiter bevorzugt ein Triol der Formel (I)

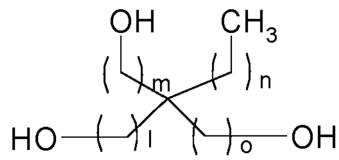

(I)

, wobei l, m, n und o jeweils unabhängig voneinander eine ganze Zahl aus dem Bereich von 1 bis 6 sind.

In einer Ausführungsform des Faserverbundstoffs sind l, m, n und o des mindestens einen Triols (ii.1.1) der Formel (I) jeweils unabhängig voneinander eine ganze Zahl aus dem Bereich von 1 bis 3, bevorzugt sind l, m, n und o alle 1.

In einer Ausführungsform des Faserverbundstoffs weist das Polyetherpolyol (ii.1) eine Hydroxylzahl im Bereich von 200 bis 2000 mg KOH/g, bevorzugt im Bereich von 300 bis 1500 mg KOH/g, weiter bevorzugt im Bereich von 400 bis 1300 mg KOH/g, auf.

In einer Ausführungsform des Faserverbundstoffs basiert das Polyetherpolyol (ii.1) auf einem Triol mit Ausnahme von Glycerin basiert, bevorzugt auf einem Triol (ii.1.1) der Formel (I) wie oben gezeigt, und weist weiter bevorzugt die Formel (II) auf,

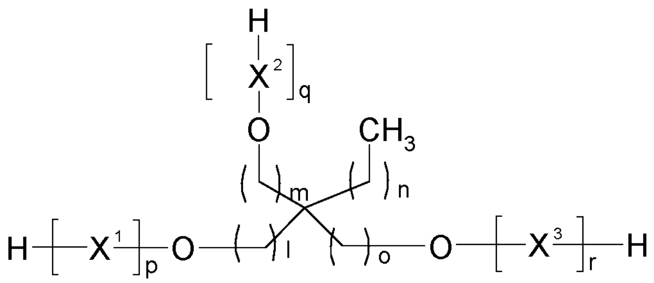

(II) ,

wobei

l, m, n und o jeweils unabhängig voneinander eine ganze Zahl aus dem Bereich von 1 bis 6 sind; p, q und r jeweils unabhängig voneinander Null oder eine ganze Zahl aus dem Bereich von 1 bis 6, bevorzugt Null oder eine ganze Zahl aus dem Bereich von 1 bis 4, weiter bevorzugt Null oder eine ganze Zahl aus dem Bereich von 1 bis 3, sind; und $X^1$, $X^2$ und $X^3$ unabhängig voneinander jeweils eine $-CH_2-CH(CH_3)-O-$Gruppe oder eine - $CH_2-CH(CH_2-CH_3)-O-$Gruppe, bevorzugt $X^1$, $X^2$ und $X^3$ jeweils eine- $CH_2-CH(CH_3)-O-$Gruppe sind. Bevorzugt sind l, m, n und o alle 1 und p, q, r nehmen unabhängig voneinander Werte von 0 bis 2 an.

In einer Ausführungsform des Faserverbundstoffs erfolgt die Umsetzung von (ii.1.1) und (ii.1.2) ausschließlich in Gegenwart eines Bor-basierten fluorhaltigen Lewis-Säure-Katalysators (ii.1.3) und es werden keine weiteren Alkoxylierungs-Katalysatoren eingesetzt. In einer Ausführungsform des Faserverbundstoffes erfolgt die Umsetzung von (ii.1.1) und (ii.1.2) ausschließlich in Gegenwart eines Bor-basierten fluorhaltigen Lewis-Säure-Katalysators (ii.1.3) in einem einstufigen Syntheseschritt. Der Bor-basierte fluorhaltige Lewis-Säure-Katalysator kann optional nach der Synthese des Polyetherols abgetrennt werden, verbleibt aber bevorzugt im Produkt. In einer Ausführungsform des Faserverbundstoffs weist das Polyetherpolyol (ii.1) keine auf Ethylenoxid-basierten Endgruppen, bevorzugt ausschließlich Propylenoxid-basierte Endgruppen und/oder Butylenoxid-basierte Endgruppen, auf. Weiter bevorzugt weist das Polyetherpolyol (ii.1) ausschließlich Propylenoxid-basierte Endgruppen und/oder Butylenoxid-basierte Endgruppen auf und enthält keine auf Ethylenoxid-basierten Gruppen. Selbst bei Nicht-Verwendung von Ethylenoxid bzw. der ausschließlichen Verwendung von Propylenoxid bzw. Butylenoxid führt der Einsatz des erfindungsgemäßen Bor-basierten fluorhaltigen Lewis-Säure-Katalysators (ii.1.3) dazu, dass das mindestens eine Polyetherpolyol (ii.1) $\geq 50\%$ primäre Hydroxyl-Gruppen aufweist, d.h. maximal 50% der Hydroxyl-Gruppen im Polyetherpolyol (ii.1) sind sekundäre Hydroxyl-Gruppen, jeweils bezogen auf die Gesamtheit aller Hydroxyl-Gruppen im Polyetherpolyol (ii.1).

In einer bevorzugten Ausführungsform des Faserverbundstoffs ist das Polyetherpolyol (ii.1) nur durch die Umsetzung von Polyol, insbesondere Triol, (ii.1.1) und Propylenoxid bzw. Butylenoxid (ii.1.2), bevorzugt nur durch die Umsetzung von Triol (ii.1.1) und Propylenoxid, erzeugt und es wird kein weiteres Alkylenoxid eingesetzt.

Als Fasern werden in einer Ausführungsform des Faserverbundstoffs vorzugsweise Glasfasern, Carbonfasern, Polyesterfasern, Naturfasern, wie Cellulosefasern, Aramidfasern, Nylonfasern, Basaltfasern, Borfasern, Zylonfasern (Poly(p-phenylen-2,6-benzobisoxazol), Siliciumcarbidfasern, Asbestfasern, Metallfasern und Kombinationen davon. Diese können beispielsweise vorliegen als Kurz- oder Langglasfasern, Endlosfasern, Gelege, Gewirke, Gestricke, Wirrfasermatten, und Lagen mit gleicher oder unterschiedlicher Faserorientierung.Techniken zum Benetzen der Fasern sind nicht beschränkt und allgemein bekannt. Diese umfassen beispielsweise das Faser-Wickelverfahren, das Pultrusionsverfahren, das Handlaminierverfahren, das RTM-Verfahren und das Infusionsverfahren wie das Vakuuminfusionsverfahren.

In einer Ausführungsform des Faserverbundstoffs umfasst die Polyolzusammensetzung ii) ein oder mehr weitere(s) Polyol(e), wobei das/die weitere(n) Polyole ausschließlich Polyole sind, welche ohne Alkalimetall-katalysierte bzw. Amin-katalysierte Alkoxylierung hergestellt wurden. Die Restmenge an Alkalimetallsalzen in der Polyolzusammensetzung ii) beträgt n < 0,5 ppm, bezogen auf das Gesamtgewicht der Polyolzusammensetzung ii).

In einer Ausführungsform des Faserverbundstoffs sind das/die weitere(n) Polyole ausgewählt aus der Gruppe bestehend aus hydroxylfunktionalisierten hydrophoben Verbindungen, fettchemischen Polyolen, Polyetherolen (Polyetherpolyolen), die in Gegenwart von Bor-haltigen Lewissäuren alkoxyliert wurden, optional Polyesterolen (Polyesterpolyolen) und optional Kettenverlängerern. Details zu den eingesetzten hydroxylfunktionalisierten hydrophoben Verbindungen, fettchemischen Polyolen, Polyetherpolyolen, die in Gegenwart von Bor-haltigen Lewissäuren alkoxyliert wurden, optionalen Polyesterpolyolen und optionalen Kettenverlängerern sind eingangs bereits zum kompakten Polyurethan erläutert; diese Details gelten ebenfalls für den hier beschriebenen Faserverbundstoff. Die Polyole der Polyolzusammensetzung (ii) sind ohne basischen oder aminischen Katalysator hergestellt; die Polyolzusammensetzung (ii) enthält keine aminischen oder basischen Katalysatoren.

Als Fasern werden vorzugsweise Glasfasern, Carbonfasern, Polyesterfasern, Naturfasern, wie Cellulosefasern, Aramidfasern, Nylonfasern, Basaltfasern, Borfasern, Zylonfasern (Poly(p-phenylen-2,6-benzobisoxazol), Siliciumcarbidfasern, Asbestfasern, Metallfasern und Kombinationen davon. Diese können beispielsweise vorliegen als Kurz- oder Langglasfasern, Endlosfasern, Gelege, Gewirke, Gestricke, Wirrfasermatten, und Lagen mit gleicher oder unterschiedlicher Faserorientierung.Techniken zum Benetzen der Fasern sind nicht beschränkt und allgemein bekannt. Diese umfassen beispielsweise das Faser-Wickelverfahren (Filament Winding), das Pultrusionsverfahren, das Handlaminierverfahren, das Resin Transfer Moulding (RTM)-Verfahren und das Infusionsverfahren wie das Vakuuminfusionsverfahren.

## Verfahren zur Herstellung eines Faserverbundstoffs

Die Erfindung betrifft weiterhin ein Verfahren zur Herstellung eines Faserverbundstoffs umfassend:

1) Bereitstellen von Fasern;
2) Bereitstellen mindestens der Komponenten:

    i) Polyisocyanatzusammensetzung;
    ii) Polyolzusammensetzung, umfassend mindestens ein Polyetherpolyol (ii.1), welches erhalten oder erhältlich ist durch Umsetzung von

        ii.1.1)einem Polyol-Starter mit einer Funktionalität von 3 bis 6, bevorzugt 3 oder 4, mit
        ii.1.2)Propylenoxid und/oder Butylenoxid,
        in Gegenwart eines Bor-basierten fluorhaltigen Lewis-Säure-Katalysators (ii.1.3), wobei das Polyetherpolyol (ii.1) ein Äquivalentmolekulargewicht von 50 bis 150 g/mol aufweist,
        ii.1.4) gegebenenfalls weiteren Hilfs- und/oder Zusatzstoffen;

3) Vermischen der Komponenten i) und ii) gemäß 2) unter Erhalt einer reaktiven Mischung;
4) Imprägnieren der Fasern mit der gemäß 3) erhaltene reaktive Mischung;
5) Aushärten der reaktiven Mischung unter Erhalt eines Faserverbundstoffes, wobei das Polyurethan kompakt ist und eine Dichte von $\geq$ 850 g/l aufweist.

Für die Polyisocyanatzusammensetzung (i) gilt im Hinblick auf das Verfahren zur Herstellung eines Faserverbundstoffs was bereits in der Sektion zum kompakten Polyurethan beschrieben ist.

In einer Ausführungsform des Verfahrens zur Herstellung eines Faserverbundstoffs weist das kompakte Polyurethan eine Dichte im Bereich von 850 bis 1250 g/l, bevorzugt eine Dichte im Bereich von 850 bis 1100 g/l auf.

In einer Ausführungsform des Verfahrens zur Herstellung eines Faserverbundstoffs weist der Bor-basierte fluorhaltige Lewis-Säure-Katalysator gemäß (ii.1.3) die Formel $BR^1R^2R^3$ auf, wobei $R^1$, $R^2$ und $R^3$ jeweils unabhängig voneinander ausgewählt sind aus der Gruppe bestehend aus Fluoratom, perfluoriertem C1 bis C10-Alkylrest und perfluoriertem C6 bis C12-Arylrest, wobei bevorzugt $R^1$, $R^2$ und $R^3$ identisch sind, wobei weiter bevorzugt der Bor-basierte fluorhaltige Lewis-Säure-Katalysator gemäß (ii.1.3) ausgewählt ist aus Bortrifluorid ($BF_3$), Tris(pentafluorphenyl)boran $(C_6F_5)_3B$ und Mischungen von $BF_3$ und $(C_6F_5)_3B$, weiter bevorzugt Tris(pentafluorphenyl)boran ist. Der Einsatz des Bor-basierten fluorhaltigen Lewis-Säure-Katalysators gemäß (ii.1.3) bei der Umsetzung von Polyol-Starter mit einer Funktionalität von 3 bis 6 (ii.1.1) und Propylenoxid und/oder Butylenoxid (ii.1.2) führt dazu, dass von den im Polyetherpolyol (ii.1) vorhandenen Hydroxyl-Gruppen ≥ 50% primäre Hydroxyl-Gruppen sind, d.h. maximal 50% der gebildeten Hydroxyl-Gruppen sind sekundäre Hydroxyl-Gruppen, jeweils bezogen auf die Gesamtheit aller Hydroxyl-Gruppen im Polyetherpolyol (ii.1).

In einer Ausführungsform des Verfahrens zur Herstellung eines Faserverbundstoff weist das Polyetherpolyol (ii.1) eine Hydroxylzahl von mehr als 400 mg KOH/g, bevorzugt von mehr als 450 mg KOH/g, weiter bevorzugt eine Hydroxylzahl im Bereich von 400 bis 1200 mg KOH/g, weiter bevorzugt im Bereich von 450 bis 1200 mg KOH/g, weiter bevorzugt im Bereich von 450 bis 1000 mg KOH/g, auf.

In einer Ausführungsform des Verfahrens zur Herstellung eines Faserverbundstoffs weist das Polyetherpolyol (ii.1) ein Äquivalentmolekulargewicht im Bereich von 50 bis 140 g/mol, bevorzugt im Bereich von 55 bis 135 g/mol, weiter bevorzugt im Bereich von 60 bis 130 g/mol, auf.

In einer Ausführungsform des Verfahrens zur Herstellung eines Faserverbundstoffs wird das Polyetherpolyol (ii.1) in 10 bis 50 Gewichts-%, bezogen auf ein Gesamtgewicht von Polyisocyanatzusammensetzung (i) und Polyolzusammensetzung (ii) von 100 Gewichts-%, eingesetzt.

In einer Ausführungsform des Verfahrens zur Herstellung eines Faserverbundstoffs ist der Polyol-Starter (ii.1.1) des Polyetherpolyols gemäß (ii.1) ein Triol mit einer Funktionalität von 3, bevorzugt ein Triol mit einer Funktionalität von 3 mit Ausnahme von Glycerin, weiter bevorzugt ein Triol der Formel (I)

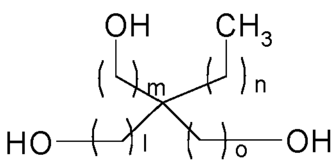

(I)

, wobei l, m, n und o jeweils unabhängig voneinander eine ganze Zahl aus dem Bereich von 1 bis 6 sind.

In einer Ausführungsform des Verfahrens zur Herstellung eines Faserverbundstoffs sind l, m, n und o des mindestens einen Triols (ii.1.1) der Formel (I) jeweils unabhängig voneinander eine ganze Zahl aus dem Bereich von 1 bis 3, bevorzugt sind l, m, n und o alle 1.

In einer Ausführungsform des Verfahrens zur Herstellung eines Faserverbundstoffs weist das Triol (ii.1.1) eine Hydroxylzahl im Bereich von 200 bis 2000 mg KOH/g, bevorzugt im Bereich von 300 bis 1850 mg KOH/g, weiter bevorzugt im Bereich von 400 bis 1850 mg KOH/g, auf.

In einer Ausführungsform des Verfahrens zur Herstellung eines Faserverbundstoffs basiert das Polyetherpolyol (ii.1) auf einem Triol mit Ausnahme von Glycerin, bevorzugt auf einem Triol (ii.1.1) der Formel (I) wie oben gezeigt, und weist weiter bevorzugt die Formel (II) auf,

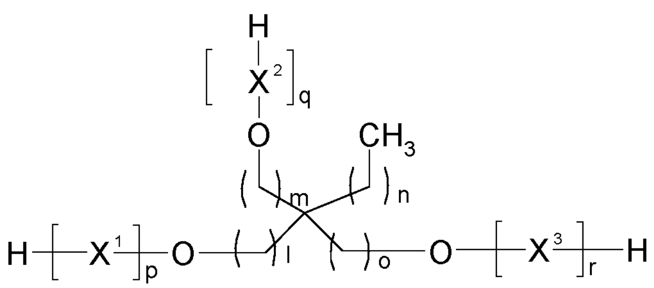

(II) ,

wobei

l, m, n und o jeweils unabhängig voneinander eine ganze Zahl aus dem Bereich von 1 bis 6 sind; p, q und r jeweils

unabhängig voneinander Null oder eine ganze Zahl aus dem Bereich von 1 bis 6, bevorzugt Null oder eine ganze Zahl aus dem Bereich von 1 bis 4, weiter bevorzugt Null oder eine ganze Zahl aus dem Bereich von 1 bis 3, sind; und $X^1$, $X^2$ und $X^3$ unabhängig voneinander jeweils eine $-CH_2-CH(CH_3)-O-$Gruppe oder eine - $CH_2-CH(CH_2-CH_3)-O-$Gruppe, bevorzugt $X^1$, $X^2$ und $X^3$ jeweils eine- $CH_2-CH(CH_3)-O-$Gruppe sind. Bevorzugt sind l, m, n und o alle 1 und p, q, r nehmen unabhängig voneinander Werte von 0 bis 2 an.

In einer Ausführungsform des Verfahrens zur Herstellung eines Faserverbundstoffs erfolgt die Umsetzung von (ii.1.1) und (ii.1.2) ausschließlich in Gegenwart eines Bor-basierten fluorhaltigen Lewis-Säure-Katalysators (ii.1.3) und es werden keine weiteren Alkoxylierungs-Katalysatoren eingesetzt. In einer Ausführungsform des Verfahrens zur Herstellung eines Faserverbundstoffs erfolgt die Umsetzung von (ii.1.1) und (ii.1.2) ausschließlich in Gegenwart eines Bor-basierten fluorhaltigen Lewis-Säure-Katalysators (ii.1.3) in einem einstufigen Syntheseschritt. Der Bor-basierte fluorhaltige Lewis-Säure-Katalysator kann optional nach der Synthese des Polyetherols abgetrennt werden, verbleibt aber bevorzugt im Produkt.

In einer Ausführungsform des Verfahrens zur Herstellung eines Faserverbundstoffs weist das Polyetherpolyol (ii.1) keine auf Ethylenoxid-basierten Endgruppen, bevorzugt ausschließlich Propylenoxid-basierte Endgruppen und/oder Butylenoxid-basierte Endgruppen, auf.

In einer Ausführungsform des Verfahrens zur Herstellung eines Faserverbundstoffs weist das Polyetherpolyol (ii.1) ausschließlich Propylenoxid-basierte Endgruppen und/oder Butylenoxid-basierte Endgruppen auf und enthält keine auf Ethylenoxid-basierten Gruppen. Selbst bei Nicht-Verwendung von Ethylenoxid bzw. der ausschließlichen Verwendung von Propylenoxid bzw. Butylenoxid führt der Einsatz des erfindungsgemäßen Bor-basierten fluorhaltigen Lewis-Säure-Katalysators (ii.1.3) dazu, dass das mindestens eine Polyetherpolyol (ii.1) $\geq$ 50% primäre Hydroxyl-Gruppen aufweist, d.h. maximal 50% der Hydroxyl-Gruppen im Polyetherpolyol (ii.1) sind sekundäre Hydroxyl-Gruppen, jeweils bezogen auf die Gesamtheit aller Hydroxyl-Gruppen im Polyetherpolyol (ii.1).

In einer Ausführungsform des Verfahrens zur Herstellung eines Faserverbundstoffs ist das Polyetherpolyol (ii.1) nur durch die Umsetzung von Polyol-Starter, insbesondere Triol, (ii.1.1) und Propylenoxid bzw. Butylenoxid (ii.1.2), bevorzugt nur durch die Umsetzung von Triol (ii.1.1) und Propylenoxid, erzeugt und kein weiteres Alkylenoxid wird eingesetzt.

In einer Ausführungsform des Verfahrens zur Herstellung eines Faserverbundstoffs umfasst die Polyolzusammensetzung ii) ein oder mehr weitere(s) Polyol(e) , wobei das/die weitere(n) Polyole ausschließlich Polyole sind, welche ohne Alkalimetall-katalysierte bzw. Amin-katalysierte Alkoxylierung hergestellt wurden.

In einer Ausführungsform des Verfahrens zur Herstellung eines Faserverbundstoffs beträgt die Restmenge an Alkalimetallsalzen in der Polyolzusammensetzung ii) n < 0,5 ppm, bezogen auf das Gesamtgewicht der Polyolzusammensetzung ii).

In einer Ausführungsform des Verfahrens zur Herstellung eines Faserverbundstoffs ist/sind die das/die weitere(n) Polyole ausgewählt aus der Gruppe bestehend aus hydroxylfunktionalisierten hydrophoben Verbindungen, fettchemischen Polyolen, Polyetherolen (Polyetherpolyolen), die in Gegenwart von Bor-haltigen Lewissäuren alkoxyliert wurden, optional Polyesterolen (Polyesterpolyolen) und optional Kettenverlängerern. Details zu den eingesetzten hydroxylfunktionalisierten hydrophoben Verbindungen, fettchemischen Polyolen, Polyetherpolyolen, die in Gegenwart von Bor-haltigen Lewissäuren alkoxyliert wurden, optionalen Polyesterpolyolen und optionalen Kettenverlängerern sind eingangs bereits zum kompakten Polyurethan erläutert; diese Details gelten ebenfalls für das hier beschriebene Verfahren zur Herstellung eines Faserverbundstoffs. Alle Polyole der Polyolzusammensetzung (ii) sind ohne basischen oder aminischen Katalysator hergestellt; die Polyolzusammensetzung (ii) enthält keine aminischen oder basischen Katalysatoren.

Die Zusammensetzung der Polyolkomponente wird vorzugsweise so eingestellt, dass die Viskosität dieser bei 25 °C vorzugsweise kleiner als 1000 mPas ist (gemessen entsprechend DIN 53019-1 bis 3). Bevorzugt beträgt die Viskosität der Polyolkomponente (ii) weniger als 500 mPas bei 23°C (gemessen entsprechend DIN 53019-1 bis 3).

Als Fasern werden vorzugsweise Glasfasern, Carbonfasern, Polyesterfasern, Naturfasern, wie Cellulosefasern, Aramidfasern, Nylonfasern, Basaltfasern, Borfasern, Zylonfasern (Poly(p-phenylen-2,6-benzobisoxazol), Siliciumcarbidfasern, Asbestfasern, Metallfasern und Kombinationen davon. Diese können beispielsweise vorliegen als Kurz- oder Langglasfasern, Endlosfasern, Gelege, Gewirke, Gestricke, Wirrfasermatten, und Lagen mit gleicher oder unterschiedlicher Faserorientierung.Techniken zum Benetzen der Fasern sind nicht beschränkt und allgemein bekannt. Diese umfassen beispielsweise das Faser-Wickelverfahren, das Pultrusionsverfahren, das Handlaminierverfahren, das RTM-Verfahren und das Infusionsverfahren wie das Vakuuminfusionsverfahren.

BEISPIELE

Chemikalien

| Abkürzung | Chemische Bezeichung |
|---|---|
| Polyol 1 | TMP-gestartetes Polyol mit OH-Zahl (OHZ) 810 mg KOH/g, hergestellt mit KOH als Katalysator für die Propoxylierung |
| Polyol 2 | TMP-gestartetes Polyol mit OHZ 550 mg KOH/g, hergestellt mit KOH als Katalysator für die Propoxylierung |
| Polyol 3 | TMP-gestartetes Polyol mit OHZ 550 mg KOH/g, hergestellt mit TPB als Katalysator für die Propoxylierung |
| Polyol 4 | Glycerin-gestartetes Polyol mit OHZ 550 mg KOH/g, hergestellt mit $BF_3$ als Katalysator für die Propoxylierung |
| Polyol 5 | TMP-gestartetes Polyol mit OHZ 810 mg KOH/g, hergestellt mit KOH als Katalysator für die Propoxylierung, nach chromatographischer Abtrennung des KOH |
| Polyol 6 | TMP-gestartetes Polyol mit OHZ 550 mg KOH/g, hergestellt mit $BF_3$ als Katalysator für die Propoxylierung |
| Polyol 7 | Umsetzungsprodukt von TMP und Propylenoxid ohne Katalysator. Minimaler Umsatz |
| Entschäumer 1 | Xiameter ACP 1000 Antifoam Compound |
| Zeolith 1 | Zeolith in Ricinusöl dispergiert |
| Isocyanat 1 | Mischung aus carbodiimid-modifiziertem Diphenylmethan-4,4-diisocyanat (mittlere Funktionalität 2,2, NCO-Gehalt 29,5 g/100 g) und Isocyanat-Prepolymer basierend auf Diphenylmethan-4,4-diisocyanat, einem Polyetherpolyol (22,4-23,4 g/100 g) und Dipropylenglykol, Gewichtsverhältnis 1:1, Viskosität: 125 MPas bei 25°C |
| TMP | 1,1,1-Trimethylolpropan |
| $BF_3$ | Bortrifluorid |
| TPB | Tris(pentafluorphenyl)boran |

**Prüfmethoden**

Viskosität nach DIN 53019-1 bis 3
Shore-Härteprüfung D nach DIN ISO 7619-1
3-Punkt-Biegeversuch nach DIN EN ISO 178
Zugfestigkeit nach DIN EN ISO 527
Charpy Schlagzähigkeit (flatwise) nach DIN En ISO 179-1/1fU
Wärmeformbeständigkeit: HDT-B-f, flachkant bei 0,45 MPa nach DIN EN ISO 75
Hydroxylzahl (OH-Zahl, OHZ): DIN 53240
Dichtebestimmung (Auftriebsverfahren): DIN EN ISO 1183-1

**Herstellung Polyole 1 bis 7**

Polyol 1

Bei Polyol 1 handelte es sich um ein Glycerin Propoxylat mit einer OH Zahl von 805 mg OH/g und einer Viskosität von 1275 mPas bei 25°C. Das Polyol wurde unter Standardbedingungen mit KOH Katalyse hergestellt. Die Restalkalität betrug 98 ppm.

Polyol 2

198,72 g Trimethylolpropan und 1.80 g wässrige KOH Lösung (50 % Gewicht) wurden bei 25 °C in einem 600 ml Reaktor vorgelegt. Anschließend wurde dreimal mit Stickstoff inertisiert. Der Kessel wurde unter Rühren auf 102 °C erhitzt und die Startermischung wurde für 1 h unter Vakuum getrocknet. Anschließend wurden 250,38 g Propylenoxid

über 4 h zudosiert. Nach einer Abreaktionszeit von 2 h wurde für 20 Minuten unter vollem Vakuum evakuiert und anschließend auf 50 °C abgekühlt. Das erhaltene Produkt (430 g) wies folgende Parameter auf:

| | |
|---|---|
| Hydroxylzahl (OHZ) | 559 mg KOH/g |
| Viskosität (25°C) | 2040 mPas |

Polyol 3

1191 g Trimethylolpropan und 0.90 g Tris(pentfluorophenl)boran wurden bei 25 °C in einem 5 l Reaktor vorgelegt. Anschließend wurde dreimal mit Stickstoff inertisiert. Der Kessel wurde unter Rühren auf 102 °C erhitzt und die Startermischung wurde für 1 h unter Vakuum getrocknet. Anschließend wurden 2508 g Propylenoxid über 3.5 h zudosiert. Nach einer Abreaktionszeit von 2 h wurde für 20 Minuten unter vollem Vakuum evakuiert und anschließend auf 50 °C abgekühlt. Das erhaltene Produkt (4450 g) wies folgende Parameter auf.

| | |
|---|---|
| Hydroxylzahl (OHZ) | 547 mg KOH/g |
| Viskosität (25°C) | 1860 mPas |

Polyol 4

Bei Polyol 4 handelte es sich um ein Glycerin Propoxylat mit einer OH Zahl von 55 mg OH/g und einer Viskosität von 655 mPas bei 25°C. Das Polyol wurde unter kationischer Katalyse mit BF3 Etherat (0,11 Massenprozent auf Gesamtansatz) hergestellt. Die Reaktionstemperatur betrug 105°C.

Polyol 5

Polyol 5 entsprach Polyol 1 mit verringerter Alkalität. Die Restalkalität betrug15 ppm.

Polyol 6

198,9 g Trimethylolpropan und 0.50 g $BF_3$-Etherat wurden bei 25 °C in einem 600 ml Reaktor vorgelegt. Anschließend wurde dreimal mit Stickstoff inertisiert. Der Kessel wurde unter Rühren auf 102 °C erhitzt. Anschließend wurden 250.6 g Propylenoxid über 3.5 h zudosiert. Nach einer Abreaktionszeit von 2 h wurde für 120 Minuten unter vollem Vakuum evakuiert und anschließend auf 50 °C abgekühlt. Das erhaltene Produkt (400 g) wies folgende Parameter auf:

| | |
|---|---|
| Hydroxylzahl (OHZ) | 520 mg KOH/g |
| Viskosität (25°C) | 1195 mPas |

Polyol 7

198,72 g Trimethylolpropan wurden bei 25 °C in einem 600 ml Reaktor vorgelegt. Anschließend wurde dreimal mit Stickstoff inertisiert. Der Kessel wurde unter Rühren auf 102 °C erhitzt und der Starter wurde für 1 h unter Vakuum getrocknet. Anschließend wurden 250,38 g Propylenoxid über 4 h zudosiert. Nach einer Abreaktionszeit von 32 h wurden weniger 10% Ausbeute ermittelt bezüglich des Additionsprodukts von TMP mit 3 Propylenoxid. Die Reaktion wurde abgebrochen da diese unkatalysierte Reaktionsführung industriell nicht wirtschaftlich anwendbar ist. Die Polyole 1 bis 6 sind unter den gleichen Reaktionsbedingungen nach 6 Stunden Reaktionsdauer praktisch vollständig umgesetzt.

**Referenzbeispiel 1 - Herstellung von Prüfplatten aus kompaktem Polyurethan**

Alle Ausgangsstoffe außer dem Isocyanat (Übliche Ansatzgröße: 300 g Polyolkomponente) wurden bei Raumtemperatur unter Vakuum vermischt, danach erfolgten die Zugabe des Isocyanats und das Vermischen für 60 s im Speedmixer (FA Hauschild), anschließend wurde Reaktionsgemischs in eine Metallform 20X30X0,4 cm bzw. 20X30X0,2 cm, vergossen, gefolgt von Abstreifen des überschüssigen Harzes mit einem Rakel und Aushärten bei 80°C für 1 h, danach für 2 h bei 120 °C. Aus dem Material wurden anschließend nach 1 Woche Lagerung bei Raumtemperatur Prüfkörper gefräst.

**Referenzbeispiel 2 - Herstellung eines Faserverbundstoffes aus kompaktem Polyurethan und Glasfasern mittels Faserwicklungsprozess (Filament Winding Prozess)**

Es wurde eine konventionelle Faserwicklungsanlage (Filament Winding Anlage) verwendet, die sich innerhalb einer Einhausung mit Absaugung befand. Über einen Luftbefeuchter konnte innerhalb der Kabine die gewünschte Luftfeuchtigkeit eingestellt wurden. Es wurde eine Spule (Bobbin) mit Endlosglasfasern verwendet, die innerhalb der Kabine gelagert wurde. Die Glasfasern wurden durch das noch ungefüllte Tränkbad geführt, dann über den Ablagekopf auf einen Dorn abgelegt. Der Dorn wurde an beiden Enden in die Drehvorrichtung eingespannt. Das Tränkbad und der Ablagekopf befanden sich auf einem Schlitten, mittels dessen Fasern auf der Länge des Dorns abgelegt werden können. Die Bewegung des Schlittens, die Drehung des Dorns und der beabsichtigte Ablagewinkel der Fasern auf dem Dorn als Funktion der Zeit wurde programmiert und dann durch die Wickelsoftware gesteuert. Als Glasfaser wurde verwendet SE3030 der Firma 3B (borfreie Glasfaser, Filamentdurchmesser 17 $\mu$m, Tex 2400 (g/km)). Als Wickelmuster wurde gewählt: 2 Umfangslagen, eine Lage +/- 45° und zwei Umfangslagen. Die Versuche wurden durchgeführt bei einer Temperatur von 25°C und einer Luftfeuchtigkeit von 85 %.

Zu Beginn des Versuchs wurden alle Ausgangsstoffe außer dem Isocyanat (Übliche Ansatzgrö-ße: 100 g Polyolkomponente) bei Raumtemperatur vermischt, danach erfolgten die Zugabe des Isocyanats und das Vermischen für 60 s im Speedmixer (FA Hauschild). Anschließend wurde das Material in das Tränkbad gefüllt. Danach wurde das Vorgarn (der Roving) manuell soweit gezogen, bis der mit Harz imprägnierte Roving auf den Dorn abgelegt und dort fixiert werden konnte. Danach wurde das Wickelprogramm gestartet und mehrere Lagen Polyurethan-getränkte Glasfasern wurden auf dem Dorn abgelegt. Nach Abschluss des Wickelvorgangs wurde die Glasfaser durchtrennt und man ließ das Material für 1 Stunde bei Raumtemperatur aushärten. Anschließend erfolgte die Härtung für 1 Stunde bei 80°C und für 2 Stunden bei 120°C.

Die Qualität der Bauteiloberfläche wurde optisch bewertet:

1: glatte Oberfläche ohne Mikroblasen
2: relativ glatte Oberfläche mit einigen Mikroblasen
3: große Anzahl an Mikroblasen
4: Rauhe, schaumartige Bauteiloberfläche
5: viele Luftblasen mit Durchmesser > 1mm, weisse, schaumartige Bauteiloberfläche

Beispiele 1 bis 3 - Herstellung von kompakten Polyurethanen auf Basis TMP-gestarteter Polyole, welche mit fluorierten Boran-Katalysatoren für die Propoxylierung erzeugt worden waren

Gemäß der Vorschrift aus Referenzbeispiel 1 bzw. Referenzbeispiel 2 wurden Prüfkörper bzw. gewickelte Polyurethan-getränkte Glasfasern hergestellt, wobei jeweils TMP-gestartete Polyole, welche mit fluorierten Boran-Katalysatoren für die Propoxylierung erzeugt worden waren, eingesetzt wurden. Tabelle 1 zeigt die Ausgangstoffe und deren Mengen, sowie die Eigenschaften der einzelnen erhaltenen Polyurethane bzw. der erhaltenen Faserverbundstoffe.

**Vergleichsbeispiele 1 bis 3 - Herstellung von kompakten Polyurethanen auf Basis TMP-gestarteter Polyole, welche mit KOH als Katalysator für die Propoxylierung erzeugt worden waren**

Gemäß der Vorschrift aus Referenzbeispiel 1 bzw. Referenzbeispiel 2 wurden Prüfkörper bzw. gewickelte Polyurethan-getränkte Glasfasern hergestellt, wobei jeweils TMP-gestartete Polyole, welche mit KOH als Katalysator für die Propoxylierung erzeugt worden waren, eingesetzt wurden. Tabelle 1 zeigt die Ausgangstoffe und deren Mengen, sowie die Eigenschaften der einzelnen erhaltenen Polyurethane der Vergleichsbeispiele 1 bis 3 bzw. der entsprechend erhaltenen Faserverbundstoffe.

**Tabelle 1**

| Zusammensetzung der Polyurethane der Beispiele 1 bis 3 und der Vergleichsbeispiele 1 bis 3 und deren Eigenschaften | | | | | | |
|---|---|---|---|---|---|---|
| | Vergl.-Bsp. 1 | Vergl.-Bsp. 2 | Bsp. 1 | Bsp. 2 | Vergl.-Bsp. 3 | Bsp. 3 |
| Polyol 1 [Gewichts-%] | 96,8 | 0 | 0 | 0 | 0 | 0 |
| Polyol 2 [Gewichts-%] | 0 | 96,8 | 0 | 0 | 0 | 0 |
| Polyol 3 [Gewichts-%] | 0 | 0 | 96,8 | 0 | 0 | 0 |
| Polyol 4 [Gewichts-%] | 0 | 0 | 0 | 96,8 | 0 | 0 |

(fortgesetzt)

| Zusammensetzung der Polyurethane der Beispiele 1 bis 3 und der Vergleichsbeispiele 1 bis 3 und deren Eigenschaften | | | | | | |
|---|---|---|---|---|---|---|
| | Vergl.-Bsp. 1 | Vergl.-Bsp. 2 | Bsp. 1 | Bsp. 2 | Vergl.-Bsp. 3 | Bsp. 3 |
| Polyol 5 [Gewichts-%] | 0 | 0 | 0 | 0 | 96,8 | 0 |
| Polyol 6 [Gewichts-%] | 0 | 0 | 0 | 0 | 0 | 96,8 |
| Entschäumer 1 [Gewichts-%] | 0,2 | 0,2 | 0,2 | 0,2 | 0,2 | 0,2 |
| Zeolith 1 [Gewichts-%] | 3 | 3 | 3 | 3 | 3 | 3 |
| Isocyanat 1 [Gewichts-%] | 268.14 | 185,1 | 185,1 | 185,1 | 270,2 | 185,1 |
| Index | 120 | 120 | 120 | 120 | 120 | 120 |
| Prüfkörper | | | | | | |
| Shore D | 85 | 83 | 83 | 83 | 83 | 83 |
| Dichte [g/l] | 1246 | 1207 | 1209 | | 1210 | 1205 |
| Biegefestigkeit [MPa] | 78 | 101 | 136 | 136 | - | - |
| Zugfestigkeit [MPa] | 35 | 77 | 82 | 82 | - | - |
| Reissdehnung [%] | 2 | 4 | 6 | 7 | - | - |
| Zug-E-Modul [MPa] | 3211 | 2940 | 3021 | 3050 | - | - |
| Charpy-Schlagzähigkeit [KJ/m$^2$] | 9,3 | 55,6 | 104,7 | 77,0 | - | - |
| Wärmeformbeständigkeit HDT b | 108 | 100 | 95 | 92 | - | - |
| Wickelversuch | | | | | | |
| Blasenbildungstendenz Wickelversuch (25°C, 85% Luftfeuchtig- | Stark (4) | Sehr stark (5) | Keine (1) | Gering (3) | Sehr stark (5) | Sehr gering (2) |
| | Vergl.-Bsp. 1 | Vergl.-Bsp. 2 | Bsp. 1 | Bsp. 2 | Vergl.-Bsp. 3 | Bsp. 3 |
| keit)* | | | | | | |
| ---: nicht bestimmt<br>* Optische Bewertung der Qualität der Bauteiloberfläche | | | | | | |

Es konnte gezeigt werden, dass der Einsatz eines Polyols, welches durch Propoxylierung aus einem Triol, insbesondere TMP, unter Katalyse eines Bor-basierten fluorhaltigen Lewis-Säure-Katalysators, insbesondere Tris(pentafluorphenyl)boran, erzeugt worden war, kompakte Polyurethane ergab, welche eine verbesserte Schlagzähigkeit von mehr als 60, insbesondere mehr als 70, aufwiesen. Weiterhin war die Shore D-Härte vergleichbar zu der von Polyurethanen, welche mit anderen, KOH-katalysiert erzeugten Polyolen hergestellten worden waren. Überraschenderweise waren die kompakten Polyurethane, welche unter Einsatz eines Polyols, welches durch Propoxylierung aus einem Triol, insbesondere TMP, unter Katalyse eines Bor-basierten fluorhaltigen Lewis-Säure-Katalysators, insbesondere Tris(pentafluorphenyl)boran, hergestellt worden waren, deutlich verbessert im Hinblick auf ihre Zugfestigkeit, welche größer als 80 MPa betrug.

Im Wickelversuch konnte gezeigt werden, dass die Verwendung von kompakten Polyurethanen, welche unter Einsatz eines Polyols, welches durch Propoxylierung aus einem Triol, insbesondere TMP, unter Katalyse eines Bor-basierten fluorhaltigen Lewis-Säure-Katalysators, insbesondere Tris(pentafluorphenyl)boran, hergestellt worden waren, zu deutlich besseren Ergebnissen im Hinblick auf die Vermeidung einer unerwünschten Blasenbildung war: die kompakten Polyurethane zeigten im Wickelversuch trotz hoher Luftfeuchtigkeit von 85 % keine bis maximal eine sehr geringe Blasenbildung, wohingegen der Einsatz von unter KOH-Katalyse erzeugten Polyole zum Schäumen führte, d.h. sich unerwünschte Blasen bildeten. Das analoge Polyol, das ohne Katalyse synthetisiert wurde, lässt sich nicht wirtschaftlich herstellen.

**Angeführte Literatur**

- Guenter Oertel, Polyurethane Handbook: Chemistry - Raw Materials - Processing - Application - Properties - 1. Januar 1994
- US 3,464,935 A
- T. Miyajima et al., Polymer Journal (2015) 47, 771-778
- WO 2016/064698 A1
- US 6,531,566 B1
- US 6,831,112 B2
- JP 2014-167105 A
- US 2003/0100623 A1
- M. Ionescu, Chemistry and Technology of Polyols, Rapra, 2005, Kapitel 17.1
- M. Ionescu, Chemistry and Technology of Polyols, Rapra, 2005, S. 67-75
- Thomas Brock, Michael Groteklaes, Peter Mischke: Lehrbuch der Lacktechnologie. Hrsg.: Ulrich Zorll, 2. Auflage, Vincentz Verlag, Hannover 2000, ISBN 978-3-87870-569-7, Kap. 2.4.2.1. Entschäumer und Entlüfter, S. 169 f
- Kunststoffhandbuch, Band 7, Polyurethane", Carl Hanser Verlag, 3. Auflage 1993, Kapitel 3.1
- "Kunststoffhandbuch, Band 7, Polyurethane", Carl Hanser Verlag, 3. Auflage 1993, Kapitel 3.4.4 und 3.4.6 bis 3.4.11
- DE 102008021980 A1
- WO 2009/115540 A1
- WO 2006/034800 A1
- EP 0090444 B1
- WO 05/090440 A1
- EP 1 803 756 A1
- M. Ionescu, Chemistry and Technology of Polyols, Rapra, 2005, S. 119 ff.
- M. Neitzel, P. Mitschang, Handbuch Verbundwerkstoffe, Carl Hanser Verlag 2004, S. 164
- M. Ionescu, Chemistry and Technology of Polyols, Rapra, 2005, S. 245-247


**Patentansprüche**

1. Kompaktes Polyurethan aufweisend eine Dichte von ≥ 850 g/l, erhalten oder erhältlich durch Umsetzung mindestens der Komponenten:

    i) Polyisocyanatzusammensetzung;
    ii) Polyolzusammensetzung, umfassend mindestens ein Polyetherpolyol (ii.1), welches erhalten oder erhältlich ist durch Umsetzung von

        ii.1.1)einem Polyol-Starter mit einer Funktionalität von 3 bis 6 mit
        ii.1.2)Propylenoxid und/oder Butylenoxid,
        in Gegenwart eines Bor-basierten fluorhaltigen Lewis-Säure-Katalysators (ii.1.3), wobei das Polyetherpolyol (ii.1) ein Äquivalentmolekulargewicht von 50 bis 150 g/mol aufweist,
        ii.1.4) gegebenenfalls weiteren Hilfs- und/oder Zusatzstoffen.

2. Kompaktes Polyurethan nach Anspruch 1, wobei der Bor-basierte fluorhaltige Lewis-Säure-Katalysator gemäß (ii.1.3) die Formel $BR^1R^2R^3$ aufweist, wobei $R^1$, $R^2$ und $R^3$ jeweils unabhängig voneinander ausgewählt sind aus der Gruppe bestehend aus Fluoratom, perfluoriertem C1 bis C10-Alkylrest und perfluoriertem C6 bis C12-Arylrest, wobei bevorzugt $R^1$, $R^2$ und $R^3$ identisch sind, wobei weiter bevorzugt der Bor-basierte fluorhaltige Lewis-Säure-Katalysator gemäß (ii.1.3) ausgewählt ist aus Bortrifluorid ($BF_3$), Tris(pentafluorphenyl)boran ($(C_6F_5)_3B$) und Mischungen von $BF_3$ und $(C_6F_5)_3B$, weiter bevorzugt Tris(pentafluorphenyl)boran ist.

3. Kompaktes Polyurethan nach Anspruch 1 oder 2, wobei das Polyetherpolyol (ii.1) eine Hydroxylzahl von mehr als 400 mg KOH/g, bevorzugt von mehr als 450 mg KOH/g, weiter bevorzugt eine Hydroxylzahl im Bereich von 400 bis 1200 mg KOH/g, weiter bevorzugt im Bereich von 450 bis 1200 mg KOH/g, weiter bevorzugt im Bereich von 450 bis 1000 mg KOH/g, aufweist;
und/oder
wobei das Polyetherpolyol (ii.1) ein Äquivalentmolekulargewicht im Bereich von 50 bis 140 g/mol, bevorzugt im

Bereich von 55 bis 135 g/mol, weiter bevorzugt im Bereich von 60 bis 130 g/mol, aufweist.

4. Kompaktes Polyurethan nach einer der Ansprüchen 1 bis 3, wobei der Polyol-Starter (ii.1.1) des Polyetherpolyols (ii.1) ein Triol mit einer Funktionalität von 3, bevorzugt ein Triol der Formel (I)

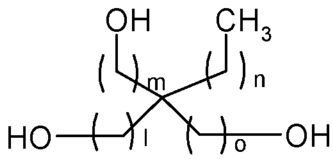

(I)

ist, wobei l, m, n und o jeweils unabhängig voneinander eine ganze Zahl aus dem Bereich von 1 bis 6 sind; bevorzugt l, m, n und o des mindestens einen Triols (ii.1.1) der Formel (I) jeweils unabhängig voneinander eine ganze Zahl aus dem Bereich von 1 bis 3, weiter bevorzugt l, m, n und o alle 1, sind.

5. Kompaktes Polyurethan nach einem der Ansprüche 1 bis 4, wobei die Umsetzung von (ii.1.1) und (ii.1.2) ausschließlich in Gegenwart eines Bor-basierten fluorhaltigen Lewis-Säure-Katalysators (ii.1.3) erfolgt und keine weiteren Alkoxylierungs-Katalysatoren eingesetzt werden.

6. Kompaktes Polyurethan nach einem der Ansprüche 1 bis 5, wobei das Polyetherpolyol (ii.1) keine auf Ethylenoxid-basierten Endgruppen, bevorzugt ausschließlich Propylenoxid-basierte Endgruppen und/oder Butylenoxid-basierte Endgruppen, aufweist; weiter bevorzugt das Polyetherpolyol (ii.1) ausschließlich Propylenoxid-basierte Endgruppen und/oder Butylenoxid-basierte Endgruppen aufweist und keine auf Ethylenoxid-basierten Gruppen enthält.

7. Kompaktes Polyurethan nach einem der Ansprüche 1 bis 6, wobei die Polyolzusammensetzung ii) ein oder mehr weitere(s) Polyol(e) umfasst, wobei das/die weitere(n) Polyole ausschließlich Polyole sind, welche ohne Alkalimetall-katalysierte bzw. Amin-katalysierte Alkoxylierung hergestellt wurden; bevorzugt ausgewählt aus der Gruppe bestehend aus hydroxylfunktionalisierten hydrophoben Verbindungen; fettchemischen Polyolen, Polyetherolen (Polyetherpolyolen), die in Gegenwart von Bor-haltigen Lewissäuren alkoxyliert wurden, optional Polyesterolen (Polyesterpolyolen) und optional Kettenverlängerern; wobei die Polyolzusammensetzung (ii) bevorzugt ausschließlich Polyole umfasst, welche ohne Alkalimetall-katalysierte bzw. Amin-katalysierte Alkoxylierung hergestellt wurden.

8. Verfahren zur Herstellung eines kompakten Polyurethans aufweisend eine Dichte von $\geq$ 850 g/l umfassend die Umsetzung mindestens der Komponenten:

   i) Polyisocyanatzusammensetzung;
   ii) Polyolzusammensetzung, umfassend mindestens ein Polyetherpolyol (ii.1), welches erhalten oder erhältlich ist durch Umsetzung von

      ii.1.1) einem Polyol-Starter mit einer Funktionalität von 3 bis 6 mit
      ii.1.2) Propylenoxid und/oder Butylenoxid,
      in Gegenwart eines Bor-basierten fluorhaltigen Lewis-Säure-Katalysators (ii.1.3), wobei das Polyetherpolyol (ii.1) ein Äquivalentmolekulargewicht von 50 bis 150 g/mol aufweist,
      ii.1.4) gegebenenfalls weiteren Hilfs- und/oder Zusatzstoffen.

9. Verfahren zur Herstellung eines kompakten Polyurethans aufweisend eine Dichte von $\geq$ 850 g/l gemäß Anspruch 8, wobei der Bor-basierte fluorhaltige Lewis-Säure-Katalysator gemäß (ii.1.3) die Formel $BR^1R^2R^3$ aufweist, wobei $R^1$, $R^2$ und $R^3$ jeweils unabhängig voneinander ausgewählt sind aus der Gruppe bestehend aus Fluoratom, perfluoriertem C1 bis C10-Alkylrest und perfluoriertem C6 bis C12-Arylrest, wobei bevorzugt $R^1$, $R^2$ und $R^3$ identisch sind, wobei weiter bevorzugt der Bor-basierte fluorhaltige Lewis-Säure-Katalysator gemäß (ii.1.3) ausgewählt ist aus Bortrifluorid ($BF_3$), Tris(pentafluorphenyl)boran $(C_6F_5)_3B$ und Mischungen von $BF_3$ und $(C_6F_5)_3B$, weiter bevorzugt Tris(pentafluorphenyl)boran ist.

10. Verfahren zur Herstellung eines kompakten Polyurethans aufweisend eine Dichte von $\geq$ 850 g/l gemäß Anspruch 8 oder 9, wobei das Polyetherpolyol (ii.1) eine Hydroxylzahl von mehr als 400 mg KOH/g, bevorzugt von mehr als

450 mg KOH/g, weiter bevorzugt eine Hydroxylzahl im Bereich von 400 bis 1200 mg KOH/g, weiter bevorzugt im Bereich von 450 bis 1200 mg KOH/g, weiter bevorzugt im Bereich von 450 bis 1000 mg KOH/g, aufweist; und/oder
wobei das Polyetherpolyol (ii.1) ein Äquivalentmolekulargewicht im Bereich von 50 bis 140 g/mol, bevorzugt im Bereich von 55 bis 135 g/mol, weiter bevorzugt im Bereich von 60 bis 130 g/mol, aufweist.

**11.** Verfahren zur Herstellung eines kompakten Polyurethans aufweisend eine Dichte von ≥ 850 g/l gemäß einem der Ansprüche 8 bis 10, wobei der Polyol-Starter (ii.1.1) des Polyetherpolyols gemäß (ii.1) ein Triol ist mit einer Funktionalität von 3, bevorzugt ein Triol der Formel (I)

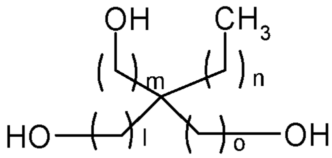

(I)

ist, wobei l, m, n und o jeweils unabhängig voneinander eine ganze Zahl aus dem Bereich von 1 bis 6, bevorzugt eine ganze Zahl aus dem Bereich von 1 bis 3, bevorzugt l, m, n und o alle 1, sind.

**12.** Kompaktes Polyurethan aufweisend eine Dichte von ≥ 850 g/l erhalten oder erhältlich nach dem Verfahren gemäß einem der Ansprüche 9 bis 11.

**13.** Verwendung eines kompakten Polyurethans aufweisend eine Dichte von ≥ 850 g/l, erhalten oder erhältlich durch Umsetzung mindestens der Komponenten:

i) Polyisocyanatzusammensetzung;
ii) Polyolzusammensetzung, umfassend mindestens ein Polyetherpolyol (ii.1), welches erhalten oder erhältlich ist durch Umsetzung von

ii.1.1) einem Polyol-Starter mit einer Funktionalität von 3 bis 6 mit
ii.1.2) Propylenoxid und/oder Butylenoxid,
in Gegenwart eines Bor-basierten fluorhaltigen Lewis-Säure-Katalysators (ii.1.3), wobei das Polyetherpolyol (ii.1) ein Äquivalentmolekulargewicht von 50 bis 150 g/mol aufweist,
ii.1.4) gegebenenfalls weiteren Hilfs- und/oder Zusatzstoffen,

für die Herstellung eines Faserverbundstoffes, bevorzugt für die Imprägnierung von Fasern.

**14.** Faserverbundwerkstoff umfassend die folgenden Komponenten:

a) ein kompaktes Polyurethan aufweisend eine Dichte von ≥ 850 g/l, erhalten oder erhältlich durch Umsetzung mindestens der Komponenten:

i) Polyisocyanatzusammensetzung;
ii) Polyolzusammensetzung, umfassend mindestens ein Polyetherpolyol (ii.1) welches erhalten oder erhältlich ist durch Umsetzung von

ii.1.1)einem Polyol-Starter mit einer Funktionalität von 3 bis 6 mit
ii.1.2)Propylenoxid und/oder Butylenoxid,

in Gegenwart eines Bor-basierten fluorhaltigen Lewis-Säure-Katalysators (ii.1.3),
wobei das Polyetherpolyol (ii.1) ein Äquivalentmolekulargewicht von 50 bis 150 g/mol aufweist,

ii.1.4) gegebenenfalls weiteren Hilfs- und/oder Zusatzstoffen;

b) Fasern, welche zumindest teilweise in das kompakte Polyurethan eingebettet vorliegen.

**15.** Verfahren zur Herstellung eines Faserverbundstoffs umfassend:

1) Bereitstellen von Fasern;
2) Bereitstellen mindestens der Komponenten:

i) Polyisocyanatzusammensetzung;
ii) Polyolzusammensetzung, umfassend mindestens ein Polyetherpolyol (ii.1), welches erhalten oder erhältlich ist durch Umsetzung von

ii.1.1)einem Polyol-Starter mit einer Funktionalität von 3 bis 6 mit
ii.1.2)Propylenoxid und/oder Butylenoxid,
in Gegenwart eines Bor-basierten fluorhaltigen Lewis-Säure-Katalysators
(ii.1.3); wobei das Polyetherpolyol (ii.1) ein Äquivalentmolekulargewicht von 50 bis 150 g/mol aufweist,
ii.1.4) gegebenenfalls weiteren Hilfs- und/oder Zusatzstoffen;

3) Vermischen der Komponenten i) und ii) gemäß 2) unter Erhalt einer reaktiven Mischung;
4) Imprägnieren der Fasern mit der gemäß 3) erhaltene reaktive Mischung;
5) Aushärten der reaktiven Mischung unter Erhalt eines Faserverbundstoffes, wobei das Polyurethan kompakt ist und eine Dichte von ≥ 850 g/l aufweist.

## Claims

**1.** A compact polyurethane having a density of ≥ 850 g/l, obtained or obtainable by reacting at least the components:

i) polyisocyanate composition;
ii) polyol composition, comprising at least one polyether polyol (ii.1) which is obtained or obtainable by reacting

ii.1.1) a polyol starter with a functionality of 3 to 6
with
ii.1.2) propylene oxide and/or butylene oxide, in the presence of a boron-based, fluorine-containing Lewis acid catalyst (ii.1.3), wherein the polyether polyol (ii.1) has an equivalent molecular weight of 50 to 150 g/mol,
ii.1.4) optionally further auxiliaries and/or additives.

**2.** The compact polyurethane according to claim 1, wherein the boron-based, fluorine-containing Lewis acid catalyst of (ii.1.3) has the formula $BR^1R^2R^3$, wherein $R^1$, $R^2$ and $R^3$ are each independently selected from the group consisting of fluorine atom, perfluorinated C1 to C10 alkyl radical and perfluorinated C6 to C12 aryl radical, wherein $R^1$, $R^2$ and $R^3$ are preferably identical, wherein the boron-based, fluorine-containing Lewis acid catalyst of (ii.1.3) is more preferably selected from boron trifluoride ($BF_3$), tris(pentafluorophenyl)borane $(C_6F_5)_3B$ and mixtures of $BF_3$ and $(C_6F_5)_3B$, more preferably is tris(pentafluorophenyl)borane.

**3.** The compact polyurethane according to claim 1 or 2, wherein the polyether polyol (ii.1) has a hydroxyl number of more than 400 mg KOH/g, preferably of more than 450 mg KOH/g, more preferably a hydroxyl number in the range from 400 to 1200 mg KOH/g, more preferably in the range from 450 to 1200 mg KOH/g, more preferably in the range from 450 to 1000 mg KOH/g;
and/or
wherein the polyether polyol (ii.1) has an equivalent molecular weight in the range from 50 to 140 g/mol, preferably in the range from 55 to 135 g/mol, more preferably in the range from 60 to 130 g/mol.

**4.** The compact polyurethane according to any of claims 1 to 3, wherein the polyol starter (ii.1.1) of the polyether polyol (ii.1) is a triol with a functionality of3, preferably a triol of the formula (I)

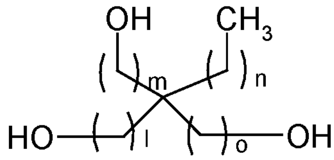

(I) ,

where l, m, n and o are each independently an integer from the range from 1 to 6; preferably l, m, n and o of the at least one triol (ii.1.1) of the formula (I) are each independently an integer from the range from 1 to 3, more preferably l, m, n and o are all 1.

5. The compact polyurethane according to any of claims 1 to 4, wherein the reaction of (ii.1.1) and (ii.1.2) is performed exclusively in the presence of a boron-based, fluorine-containing Lewis acid catalyst (ii.1.3) and no further alkoxylation catalysts are used.

6. The compact polyurethane according to any of claims 1 to 5, wherein the polyether polyol (ii.1) has no ethylene oxide-based end groups, preferably has exclusively propylene oxide-based end groups and/or butylene oxide-based end groups; more preferably the polyether polyol (ii.1) has exclusively propylene oxide-based end groups and/or butylene oxide-based end groups and comprises no ethylene oxide-based groups.

7. The compact polyurethane according to any of claims 1 to 6, wherein the polyol composition ii) comprises one or more further polyols, wherein the further polyol(s) is/are exclusively polyols which have been prepared without alkali metal-catalyzed or amine-catalyzed alkoxylation; preferably selected from the group consisting of hydroxyl-functionalized hydrophobic compounds; oleochemical polyols, polyetherols (polyether polyols) which have been alkoxylated in the presence of boron-containing Lewis acids, optionally polyesterols (polyester polyols) and optionally chain extenders; wherein the polyol composition (ii) preferably exclusively comprises polyols which have been prepared without alkali metal-catalyzed or amine-catalyzed alkoxylation.

8. A process for producing a compact polyurethane having a density of ≥ 850 g/l, comprising the reaction of at least the components:

i) polyisocyanate composition;
ii) polyol composition, comprising at least one polyether polyol (ii.1) which is obtained or obtainable by reacting

ii.1.1) a polyol starter with a functionality of 3 to 6
with
ii.1.2) propylene oxide and/or butylene oxide, in the presence of a boron-based, fluorine-containing Lewis acid catalyst (ii.1.3), wherein the polyether polyol (ii.1) has an equivalent molecular weight of 50 to 150 g/mol,
ii.1.4) optionally further auxiliaries and/or additives.

9. The process for producing a compact polyurethane having a density of ≥ 850 g/l according to claim 8, wherein the boron-based, fluorine-containing Lewis acid catalyst of (ii.1.3) has the formula $BR^1R^2R^3$, wherein $R^1$, $R^2$ and $R^3$ are each independently selected from the group consisting of fluorine atom, perfluorinated C1 to C10 alkyl radical and perfluorinated C6 to C12 aryl radical, wherein $R^1$, $R^2$ and $R^3$ are preferably identical, wherein the boron-based, fluorine-containing Lewis acid catalyst of (ii.1.3) is more preferably selected from boron trifluoride ($BF_3$), tris (pentafluorophenyl) borane $(C_6F_5)_3B$ and mixtures of $BF_3$ and $(C_6F_5)_3B$, more preferably is tris(pentafluorophenyl)borane.

10. The process for producing a compact polyurethane having a density of ≥ 850 g/l according to claim 8 or 9, wherein the polyether polyol (ii.1) has a hydroxyl number of more than 400 mg KOH/g, preferably of more than 450 mg KOH/g, more preferably a hydroxyl number in the range from 400 to 1200 mg KOH/g, more preferably in the range from 450 to 1200 mg KOH/g, more preferably in the range from 450 to 1000 mg KOH/g;
and/or
wherein the polyether polyol (ii.1) has an equivalent molecular weight in the range from 50 to 140 g/mol, preferably in the range from 55 to 135 g/mol, more preferably in the range from 60 to 130 g/mol.

11. The process for producing a compact polyurethane having a density of ≥ 850 g/l according to any of claims 8 to 10,

wherein the polyol starter (ii.1.1) of the polyether polyol of (ii.1) is a triol with a functionality of 3, preferably a triol of the formula (I)

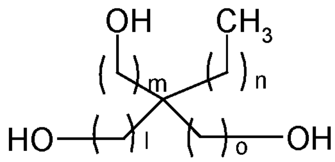

(I) ,

where l, m, n and o are each independently an integer from the range from 1 to 6, preferably an integer from the range from 1 to 3, preferably l, m, n and o are all 1.

**12.** A compact polyurethane having a density of ≥ 850 g/l, obtained or obtainable by the process according to any of claims 9 to 11.

**13.** The use of a compact polyurethane having a density of ≥ 850 g/l, obtained or obtainable by reacting at least the components:

i) polyisocyanate composition;
ii) polyol composition, comprising at least one polyether polyol (ii.1) which is obtained or obtainable by reacting

ii.1.1) a polyol starter with a functionality of 3 to 6
with
ii.1.2) propylene oxide and/or butylene oxide, in the presence of a boron-based, fluorine-containing Lewis acid catalyst (ii.1.3), wherein the polyether polyol (ii.1) has an equivalent molecular weight of 50 to 150 g/mol,
ii.1.4) optionally further auxiliaries and/or additives,

for the production of a fiber composite, preferably for the impregnation of fibers.

**14.** A fiber composite material comprising the following components:

a) a compact polyurethane having a density of ≥ 850 g/l, obtained or obtainable by reacting at least the components:

i) polyisocyanate composition;
ii) polyol composition, comprising at least one polyether polyol (ii.1) which is obtained or obtainable by reacting

ii.1.1) a polyol starter with a functionality of 3 to 6
with
ii.1.2) propylene oxide and/or butylene oxide,

in the presence of a boron-based, fluorine-containing Lewis acid catalyst (ii.1.3),
wherein the polyether polyol (ii.1) has an equivalent molecular weight of 50 to 150 g/mol,

ii.1.4) optionally further auxiliaries and/or additives;

b) fibers which are at least partially embedded in the compact polyurethane.

**15.** A process for producing a fiber composite, comprising:

1) providing fibers;
2) providing at least the components:

i) polyisocyanate composition;

ii) polyol composition, comprising at least one polyether polyol (ii.1) which is obtained or obtainable by reacting

ii.1.1) a polyol starter with a functionality of 3 to 6
with
ii.1.2) propylene oxide and/or butylene oxide,
in the presence of a boron-based, fluorine-containing Lewis acid catalyst (ii.1.3); wherein the polyether polyol (ii.1) has an equivalent molecular weight of 50 to 150 g/mol,
ii.1.4) optionally further auxiliaries and/or additives;

3) mixing components i) and ii) of 2) to obtain a reactive mixture;
4) impregnating the fibers with the reactive mixture obtained as per 3);
5) curing the reactive mixture to obtain a fiber composite, wherein the polyurethane is compact and has a density of ≥ 850 g/l.

## Revendications

**1.** Polyuréthane compact ayant une masse volumique ≥ 850 g/l, obtenu ou pouvant être obtenu par réaction d'au moins l'un des composants suivants :

i) une composition de polyisocyanates ;
ii) une composition de polyols, comprenant au moins un polyétherpolyol (ii.1), qui est obtenu ou peut être obtenu par réaction de :

ii.1.1) un polyol de départ ayant une fonctionnalité de 3 à 6
avec
ii.1.2) de l'oxyde de propylène et/ou de l'oxyde de butylène,
en présence d'un catalyseur acide de Lewis fluoré à base de bore (ii.1.3), le polyétherpolyol (ii.1) ayant une masse moléculaire équivalente de 50 à 150 g/mol,
ii.1.4) éventuellement d'autres additifs et/ou adjuvants.

**2.** Polyuréthane compact selon la revendication 1, dans lequel le catalyseur acide de Lewis fluoré à base de bore selon (ii.1.3) a la formule $BR^1R^2R^3$, dans laquelle $R^1$, $R^2$ et $R^3$ sont chacun indépendamment des autres choisis dans le groupe consistant en un atome de fluor, un radical alkyle en C1 à C10 perfluoré et un radical aryle en C6 à C12 perfluoré, de préférence $R^1$, $R^2$ et $R^3$ étant identiques, et de plus de préférence le catalyseur acide de Lewis fluoré à base de bore selon (ii.1.3) étant choisi parmi le trifluorure de bore ($BF_3$), le tris (pentafluorophényl)borane $(C_6F_5)_3B$ et les mélanges de $BF_3$ et de $(C_6F_5)_3B$, plus particulièrement étant le tris(pentafluorophényl)borane.

**3.** Polyuréthane compact selon la revendication 1 ou 2, dans lequel le polyétherpolyol (ii.1) a un indice d'hydroxyle supérieur à 400 mg KOH/g, de préférence supérieur à 450 mg KOH/g, plus préférentiellement un indice d'hydroxyle dans la plage de 400 à 1 200 mg KOH/g, plus préférentiellement dans la plage de 450 à 1 200 mg KOH/g, plus préférentiellement dans la plage de 450 à 1 000 mg KOH/g ;
et/ou
dans lequel le polyétherpolyol (ii.1) a une masse moléculaire équivalente dans la plage de 50 à 140 g/mol, de préférence dans la plage de 55 à 135 g/mol, plus préférentiellement dans la plage de 60 à 130 g/mol.

**4.** Polyuréthane compact selon l'une des revendications 1 à 3, dans lequel le polyol de départ (ii.1.1) du polyétherpolyol (ii.1) est un triol ayant une fonctionnalité de 3, de préférence un triol de Formule (I)

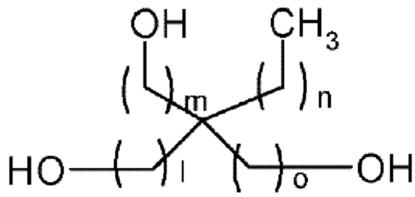

(I)

dans laquelle l, m, n et o représentent chacun indépendamment des autres un nombre entier dans la plage de 1 à 6 ; de préférence, l, m, n et o de l'au moins un triol (ii.1.1) de Formule (I) représentent chacun indépendamment des autres un nombre entier dans la plage de 1 à 3, plus préférentiellement l, m, n et o représentent tous 1.

**5.** Polyuréthane compact selon l'une des revendications 1 à 4, dans lequel la réaction de (ii.1.1) et de (ii.1.2) a lieu exclusivement en présence d'un catalyseur acide de Lewis fluoré à base de bore (ii.1.3), et aucun autre catalyseur d'alcoxylation n'est utilisé.

**6.** Polyuréthane compact selon l'une des revendications 1 à 5, dans lequel le polyétherpolyol (ii.1) ne comprend aucun groupe terminal à base d'oxyde d'éthylène, et comprend de préférence exclusivement des groupes terminaux à base d'oxyde de propylène et/ou des groupes terminaux à base d'oxyde de butylène ; plus préférentiellement, le polyétherpolyol (ii.1) comprend exclusivement des groupes terminaux à base d'oxyde de propylène et/ou des groupes terminaux à base d'oxyde de butylène, et ne contient aucun groupe à base d'oxyde d'éthylène.

**7.** Polyuréthane compact selon l'une des revendications 1 à 6, dans lequel la composition de polyols ii) comprend un ou plusieurs autres polyols, le ou les autres polyols étant exclusivement des polyols qui ont été fabriqués sans alcoxylation catalysée par un métal alcalin ou par une amine ; de préférence choisis dans le groupe consistant en les composés hydrophobes à fonctionnalité hydroxyle ; les polyols de la chimie grasse, les polyétherols (polyétherpolyols), qui ont été alcoxylés en présence d'acides de Lewis contenant du bore, éventuellement les polyestérols (polyesterpolyols) et éventuellement des prolongateurs de chaîne ; la composition de polyols (ii) comprenant de préférence exclusivement des polyols qui ont été fabriqués sans alcoxylation catalysée par un métal alcalin ou par une amine.

**8.** Procédé de fabrication d'un polyuréthane compact ayant une masse volumique ≥ 850 g/l comprenant la réaction d'au moins les composants :

i) une composition de polyisocyanates ;
ii) une composition de polyols, comprenant au moins un polyétherpolyol (ii.1) qui est obtenu ou peut être obtenu par réaction de :

ii.1.1) un polyol de départ ayant une fonctionnalité de 3 à 6
avec
ii.1.2) de l'oxyde de propylène et/ou de l'oxyde de butylène,
en présence d'un catalyseur acide de Lewis fluoré à base de bore (ii.1.3), le polyétherpolyol (ii.1) ayant une masse moléculaire équivalente de 50 à 150 g/mol,
ii.1.4) éventuellement d'autres additifs et/ou adjuvants.

**9.** Procédé de fabrication d'un polyuréthane compact ayant une masse volumique ≥ 850 g/l selon la revendication 8, dans lequel le catalyseur acide de Lewis fluoré à base de bore selon (ii.1.3) a la formule $BR^1R^2R^3$, dans laquelle $R^1$, $R^2$ et $R^3$ sont chacun indépendamment des autres choisis dans le groupe consistant en un atome de fluor, un radical alkyle en C1 à C10 perfluoré et un radical aryle en C6 à C12 perfluoré, de préférence $R^1$, $R^2$ et $R^3$ étant identiques, et plus préférentiellement le catalyseur acide de Lewis fluoré à base de bore selon (ii.1.3) est choisi parmi le trifluorure de bore ($BF_3$), le tris(pentafluorophényl)borane $(C_6F_5)_3B$ et les mélanges de $BF_3$ et de $(C_6F_5)_3B$, et plus préférentiellement est le tris(pentafluorophényl)borane.

**10.** Procédé de fabrication d'un polyuréthane compact ayant une masse volumique ≥ 850 g/l selon la revendication 8 ou 9, dans lequel le polyétherpolyol (ii.1) a un indice d'hydroxyle supérieur à 400 mg KOH/g, de préférence supérieur

à 450 mg KOH/g, plus préférentiellement un indice d'hydroxyle dans la plage de 400 à 1 200 mg KOH/g, plus préférentiellement dans la plage de 450 à 1 200 mg KOH/g, plus préférentiellement dans la plage de 450 à 1 000 mg KOH/g ;
et/ou
le polyétherpolyol (ii.1) ayant une masse moléculaire équivalente dans la plage de 50 à 140 g/mol, de préférence dans la plage de 55 à 135 g/mol, plus préférentiellement dans la plage de 60 à 130 g/mol.

**11.** Procédé de fabrication d'un polyuréthane compact ayant une masse volumique ≥ 850 g/l selon l'une des revendications 8 à 10, dans lequel le polyol de départ (ii.1.1) du polyétherpolyol selon (ii.1) est un triol ayant une fonctionnalité de 3, de préférence un triol de Formule (I)

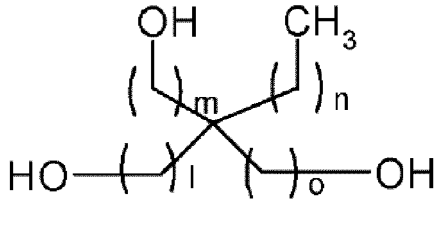

(I)

dans laquelle l, m, n et o représentent chacun indépendamment des autres un nombre entier dans la plage de 1 à 6, de préférence un nombre entier dans la plage de 1 à 3, de préférence l, m, n et o représentent tous 1.

**12.** Polyuréthane compact ayant une masse volumique ≥ 850 g/l obtenu ou pouvant être obtenu par le procédé selon l'une des revendications 9 à 11.

**13.** Utilisation d'un polyuréthane compact ayant une masse volumique ≥ 850 g/l, obtenu ou pouvant être obtenu par réaction d'au moins l'un des composants suivants :

i) une composition de polyisocyanates ;
ii) une composition de polyols comprenant au moins un polyétherpolyol (ii.1) qui est obtenu ou peut être obtenu par réaction de :

ii.1.1) un polyol de départ ayant une fonctionnalité de 3 à 6
avec
ii.1.2) de l'oxyde de propylène et/ou de l'oxyde de butylène,
en présence d'un catalyseur acide de Lewis fluoré à base de bore (ii.1.3), le polyétherpolyol (ii.1) ayant une masse moléculaire équivalente de 50 à 150 g/mol,
ii.1.4) éventuellement d'autres additifs et/ou adjuvants,

pour la fabrication d'un composite fibreux, de préférence pour l'imprégnation de fibres.

**14.** Composite fibreux comprenant les composants suivants :

a) un polyuréthane compact ayant une masse volumique ≥ 850 g/l, obtenu ou pouvant être obtenu par réaction d'au moins les composants suivants :

i) une composition de polyisocyanates ;
ii) une composition de polyols comprenant au moins un polyétherpolyol (ii.1) qui est obtenu ou peut être obtenu par réaction de :

ii.1.1) un polyol de départ ayant une fonctionnalité de 3 à 6
avec
ii.1.2) de l'oxyde de propylène et/ou de l'oxyde de butylène,

en présence d'un catalyseur acide de Lewis fluoré à base de bore (ii.1.3),

le polyétherpolyol (ii.1) ayant une masse moléculaire équivalente de 50 à 150 g/mol,

ii.1.4) éventuellement d'autres additifs et/ou adjuvants ;

b) des fibres, qui au moins partiellement sont incorporées dans le polyuréthane compact.

**15.** Procédé de fabrication d'un composite fibreux, comprenant :

1) la fourniture de fibres ;
2) la fourniture d'au moins les composants :

i) une composition de polyisocyanates ;
ii) une composition de polyols, comprenant au moins un polyétherpolyol (ii.1), qui est obtenu ou peut être obtenu par réaction de :

ii.1.1) un polyol de départ ayant une fonctionnalité de 3 à 6
avec
ii.1.2) de l'oxyde de propylène et/ou de l'oxyde de butylène,
en présence d'un catalyseur acide de Lewis fluoré à base de bore (ii.1.3), le polyétherpolyol (ii.1) ayant une masse moléculaire équivalente de 50 à 150 g/mol,
ii.1.4) éventuellement d'autres additifs et/ou adjuvants ;

3) le mélange des composants i) et ii) selon 2) avec obtention d'un mélange réactif ;
4) l'imprégnation des fibres avec le mélange réactif obtenu selon 3) ;
5) le durcissement du mélange réactif avec obtention d'un composite fibreux, le polyuréthane étant compact et ayant une masse volumique ≥ 850 g/l.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3464935 A
- EP 1803756 A1
- WO 2016064698 A1
- US 6531566 B1
- US 6831112 B2
- JP 2014167105 A
- US 20030100623 A1
- WO 2006034800 A1
- EP 0090444 B1
- WO 05090440 A1
- DE 102008021980 A1
- WO 2009115540 A1


### In der Beschreibung aufgeführte Nicht-Patentliteratur


- **GUENTER OERTEL.** *Polyurethane Handbook: Chemistry - Raw Materials - Processing - Application - Properties,* 01. Januar 1994
- **M. LONESCU.** Chemistry and Technology of Polyols. Rapra, 2005, 119
- **S. M. NEITZEL ; P. MITSCHANG.** Handbuch Verbundwerkstoffe. Carl Hanser Verlag, 2004, 164
- **M. LONESCU.** *Chemistry and Technology of Polyols, Rapra,* 2005, 245-247
- **T. MIYAJIMA et al.** *Polymer Journal,* 2015, vol. 47, 771-778
- **M. LONESCU.** Chemistry and Technology of Polyols. Rapra, 2005, 67-75
- **M. LONESCU.** Chemistry and Technology of Polyols. Rapra, 2005
- Polyurethane. Kunststoffhandbuch. Carl Hanser Verlag, 1993, vol. 3
- Entschäumer und Entlüfter. **THOMAS BROCK ; MICHAEL GROTEKLAES ; PETER MISCHKE.** Lehrbuch der Lacktechnologie. Vincentz Verlag, 2000, 169
- Lehrbuch der Lacktechnologie. **THOMAS BROCK ; MICHAEL GROTEKLAES ; PETER MISCHKE.** Hrsg.: Ulrich Zorll. Vincentz Verlag, vol. 2, 169
- **M. NEITZEL ; P. MITSCHANG.** Handbuch Verbundwerkstoffe. Carl Hanser Verlag, 2004, 164
- **M. LONESCU.** Chemistry and Technology of Polyols. Rapra, 2005, 245-247